# EUROPÄISCHE PATENTSCHRIFT

(11) **EP 1 194 494 B1**
(45) Veröffentlichungstag und Bekanntmachung des Hinweises auf die Patenterteilung: **15.10.2003**
(21) Anmeldenummer: 00947927.0
(22) Anmeldetag: 05.07.2000
(51) Int. Cl.: C09D 175/04

(54) **WÄSSRIGER BESCHICHTUNGSSTOFF, VERFAHREN ZU SEINER HERSTELLUNG UND SEINE VERWENDUNG**
AQUEOUS COATING SUBSTANCE, METHOD FOR ITS PRODUCTION AND ITS USE
SUBSTANCE DE REVETEMENT AQUEUSE, SON PROCEDE DE PRODUCTION ET SON UTILISATION

(30) Priorität: 12.07.1999 DE 19932497
(43) Veröffentlichungstag der Anmeldung: 10.04.2002
(73) Patentinhaber: BASF Coatings Aktiengesellschaft, 48165 Münster (DE)
(72) Erfinder: GROSS, Lutz-Werner, D-45721 Haltern (DE); MOORKAMP, Ludwig, D-48165 Münster (DE); GRUMPE, Heinz-Ulrich, D-48308 Senden (DE); POTH, Ulrich, D-48163 Münster (DE)
(74) Vertreter: Fitzner, Uwe, Dr.
(86) Internationale Anmeldenummer: EP0006286
(87) Internationale Veröffentlichungsnummer: WO01004222

(56) Entgegenhaltungen:
- EP-A- 0 590 484
- DE-A- 19 705 219

## Beschreibung

Die vorliegende Erfindung betrifft einen neuen wäßrigen Beschichtungsstoff auf der Basis von Polyestern, Polyurethanacrylaten, Aminoplastharzen und Pigmenten und/oder Füllstoffen. Außerdem betrifft die vorliegende Erfindung ein Verfahren zur Herstellung des neuen wäßrigen Beschichtungsstoffs. Des weiteren betrifft die vorliegende Erfindung die Verwendung des neuen Beschichtungsstoffs als Unidecklack oder Wasserbasislack für die Herstellung ein- oder mehrschichtiger farb- und/oder effektgebender Lackierungen, insbesondere für Nutzfahrzeugkarosserien.

Wäßrige Beschichtungsstoffe auf der Basis von Polyacrylaten, Polyurethanen, Polyestern, Aminoplastharzen und Pigmenten und/oder Füllstoffen sind aus den europäischen Patenten EP-B-0 521 919 oder EP-B-0 593 454 bekannt. Diese Beschichtungsstoffe weisen aufgrund ihres obligatorischen Gehalts an Polyacrylaten einen erhöhten Feststoffgehalt, eine geringere Läuferneigung und eine Stabilisierung gegenüber schwankender Scherbelastung auf. Letzteres führt zu einem verbesserten Absetzverhalten, einer einfacheren Handhabarkeit und einer erhöhten Applikationssicherheit.

Bei den hierin fakultativ verwendeten Polyurethanen handelt es sich nicht um Polyurethanacrylate.

Die fakultativ verwendeten Polyester sind erhältlich aus mindestens einen Polyol und mindestens einer Polycarbonsäure und/oder mindestens einem Polycarbonsäureanhydrid. Die Polyole bestehen überwiegend aus aliphatischen Diolen, die mindestens ein alpha-Kohlenstoffatom enthalten, das sekundär, tertiär oder Glied eines kohlenstoffhaltigen Ringsystems ist. Die Polycarbonsäuren und/oder Polycarbonsäureanhydride bestehen aus aromatischen und/oder cycloaliphatischen Polycarbonsäuren und aus Tri- und/oder Tetracarbonsäuren, die so eingesetzt werden, daß sie im statistischen Mittel über mindestens zwei Carboxylgruppen in die Polyester eingebaut werden.

Die bekannten wäßrigen Beschichtungsstoffe können als Unidecklacke verwendet werden. Bevorzugt werden sie aber als Wasserbasislacke für die Lackierung nach dem Naß-in-naß-Verfahren verwendet.

Wäßrige Beschichtungsstoffe auf der Basis von Polyurethanacrylaten, Polyestern, Aminoplastharzen und Pigmenten und/oder Füllstoffen sind aus dem europäischen Patent EP-B-0 730 613 und der deutschen Patentschrift DE 197 05 219 A bekannt. Es wird zwar angegeben, daß die Polyurethanacrylate mit vielen zusätzlich eingesetzten Bindemitteln wie beispielsweise Aminoplastharzen und Polyesterharzen gut verträglich sind, diese zusätzlichen Bindemittel sind indes weder in ihrer stofflichen Zusammensetzung noch hinsichtlich der Menge, in der sie angewendet werden sollen, näher spezifiziert. Auch diese bekannten Beschichtungsstoffe können als Unidecklacke verwendet werden. Bevorzugt werden sie indes als Wasserbasislacke für das Naß-in-naß-Verfahren verwendet.

Während im PKW-Bereich der Wechsel von Unidecklackierungen zu Zweischichtdecklackierungen schon vor Jahren vollzogen und parallel hierzu die Entwicklung von Wasserbasislacken betrieben wurde, zeichnet sich bei den Nutzfahrzeugen noch kein Wechsel zu Zweischichtdecklackierungen ab. Grund hierfür ist der Aufwand, der bei den Applikationsanlagen betrieben werden müßte. Um Nutzfahrzeugkarosserien mit Zweischichtdecklackierungen zu versehen, wäre eine Vollautomatisierung der Innenlackierung notwendig, weil die Innenräume bei der Zweischichtlackierung nicht begehbar wären, so daß zwei getrennte Applikationsvorrichtungen und eine zusätzliche Vortrocknung des Basislacks eingerichtet werden müßten. Hinzu käme noch, daß bei Verwendung konventioneller Klarlacke oder, besonders bevorzugt, organisch gelöster Zweikomponentenklarlacke, eine erhebliche Emission organischer Lösemittel in Kauf genommen werden müßte.

Der Markt fordert daher einen Unidecklack für die Nutzfahrzeuglackierung, der Unidecklackierungen liefert, die in ihrer optischen Qualität und in ihrem sonstigen Eigenschaftsprofil den Zweischichtdecklackierungen zumindest entsprechen, wenn nicht gar übertreffen. Außerdem fordert der Markt im Hinblick auf Umweltprobleme, daß dieser Unidecklack wäßrig ist und dabei wie ein konventioneller Decklack verarbeitet werden kann.

Weil die bisher bekannten, eingangs beschriebenen Beschichtungsstoffe insbesondere zur Verwendung als wäßrige Basislacke im Rahmen der Zweischichtlackierung nach dem Naß-in-naß-Verfahren entwickelt wurden, können sie in der Verwendung als Decklacke die Forderungen nicht in dem Umfang erfüllen, wie es wünschenswert wäre.

Nicht zuletzt besteht die Forderung, daß der Original-Unidecklack auch als Reparaturlack in der Linie verwendet werden kann. Hierzu sind Vernetzungstemperaturen von 80 bis 100°C notwendig, um die fertigen Nutzfahrzeuge nicht zu schädigen. Bei konventionellen Unidecklacken auf der Basis von Alkydharz/Melaminharz wird dies in einfacher Weise durch Zugabe von stark sauren Katalysatoren gewährleistet. Eine solche Problemlösung ist indes bei den bekannten, eingangs beschriebenen wäßrigen Beschichtungsstoffen, welche wegen der Neutralisation ihrer Bindemittel insbesondere mit Aminen wasserdispergierbar sind, naturgemäß nicht möglich.

Ob aber diese bekannten wäßrigen Beschichtungsstoffe durch die Zugabe von Polyisocyanaten wäßrige Zweikomponentensysteme von hoher Standzeit und Applikationssicherheit liefern, welche sich insbesondere im Rahmen der Lackierung von Nutzfahrzeugen für die Unidecklackierung von Kunststoffteilen und als Original-Reparaturlacke für Unidecklackierungen eignen, geht aus den eingangs genannten Patentschriften nicht hervor.

Aufgabe der vorliegenden Erfindung ist es, einen neuen Beschichtungsstoff bereitzustellen, der die Nachteile des Standes der Technik nicht mehr länger aufweist, sondern die Forderungen des Markts in vollem Umfang erfüllt und insbesondere als Unidecklack für die Serienlackierung von Nutzfahrzeugen und. als Original-Reparaturlack für die Reparaturlackierung in der Linie bei vergleichsweise niedrigen Einbrenntemperaturen geeignet ist.

Demgemäß wurde der neue wäßrige Beschichtungsstoff gefunden, der
A) mindestens einen wasserlöslichen oder -dispergierbaren Polyester,
B) mindestens ein wasserlösliches oder -dispergierbares Polyurethanacrylat,
C) mindestens ein Aminoplastharz, das als solches oder in der Gegenwart der Bestandteile (A) und (B) wasserlöslich oder -dispergierbar ist und
D) mindestens ein farb- und/oder effektgebendes Pigment und/oder einen Füllstoff sowie gegebenenfalls
E) mindestens ein Polyisocyanat
enthält und der dadurch gekennzeichnet ist, daß der Polyester (A) herstellbar ist aus
a1) einem Gemisch, enthaltend
   a11) 40 bis 80 Mol-% mindestens einer aliphatischen oder cycloaliphatischen Polycarbonsäure oder mindestens eines veresterungsfähigen Derivats einer aliphatischen oder cycloaliphatischen Polycarbonsäure oder eines Gemisches mindestens zweier dieser Ausgangsprodukte, a12) 20 bis 60 Mol-% mindestens einer aromatischen Polycarbonsäure, mindestens eines veresterungsfähigen Derivats einer aromatischen Polycarbonsäure oder eines Gemisches mindestens zweier dieser Ausgangsprodukte;
   und
a2) mindestens 60 Mol-% mindestens eines aliphatischen oder cycloaliphatischen Polyols, das im Molekül mindestens ein Strukturelement -C{R¹R²)-CH₂OH, worin die Reste R¹ und R² für aliphatische, cycloaliphatische oder aromatische Kohlenwasserstoffereste mit 1 bis 20 Kohlenstoffatomen oder für Methylolgruppen stehen, enthält, oder eines Gemisches mindestens zweier dieser Ausgangsprodukte.

Im folgenden wird der neue wäßrige Beschichtungsstoff als "erfindungsgemäßer Beschichtungsstoff" oder, spezieller, als "erfindungsgemäßer Unidecklack", "erfindungsgemäßer Original-Reparaturlack" oder "erfindungsgemäßer Wasserbasislack" bezeichnet.

Außerdem wurde das neue Verfahren zur Herstellung eines wäßrigen Beschichtungsstoffs durch Vermischen mindestens der folgenden Bestandteile in einem wäßrigem Medium gefunden:
A) mindestens ein wasserlöslicher oder -dispergierbarer Polyester,
B) mindestens ein wasserlösliches oder -dispergierbares Polyurethanacrylat,
C) mindestens ein Aminoplastharz, das als solches oder in der Gegenwart der Bestandteile (A) und (B) wasserlöslich oder -dispergierbar ist, und
D) mindestens ein farb- und/oder effektgebendes Pigment und/oder ein Füllstoff;
bei dem der Polyester (A) herstellbar ist aus
a1) einem Gemisch, enthaltend
   a11) 40 bis 80 Mol-% mindestens einer aliphatischen oder cycloaliphatischen Polycarbonsäure oder mindestens eines veresterungsfähigen Derivats einer aliphatischen oder cycloaliphatischen Polycarbonsäure oder eines Gemisches mindestens zweier dieser Ausgangsprodukte,
   a12) 20 bis 60 Mol-% mindestens einer aromatischen Polycarbonsäure, mindestens eines veresterungsfähigen Derivats einer aromatischen Polycarbonsäure oder eines Gemisches mindestens zweier dieser Ausgangsprodukte;
   und
a2) mindestens 60 Mol-% mindestens eines aliphatischen oder cycloaliphatischen Polyols, das im Molekül mindestens ein Strukturelement -C(R¹R²)-CH₂OH, worin die Reste R¹ und R² für aliphatische, cycloaliphatische oder aromatische Kohlenwasserstoffereste mit 1 bis 20 Kohlenstoffatomen oder für Methylolgruppen stehen, enthält, oder eines Gemisches mindestens zweier dieser Ausgangsprodukte.

Im folgenden wird das neue Verfahren zur Herstellung eines Beschichtungsstoffs als "erstes erfindungsgemäßes Herstellverfahren" bezeichnet.

Des weiteren wurde ein zweites neues Verfahren zur Herstellung eines wäßrigen Beschichtungsstoffs durch
I) Vermischen mindestens der folgenden Bestandteile in einem wäßrigem Medium:
   A) mindestens ein wasserlöslicher oder -dispergierbarer Polyester,
   B) mindestens ein wasserlösliches oder -dispergierbares Polyurethanacrylat,
   C) mindestens ein Aminoplastharz, das als solches oder in der Gegenwart der Bestandteile (A) und (B) wasserlöslich oder - dispergierbar ist, und
   D) mindestens ein farb- und/oder effektgebendes Pigment und/oder ein Füllstoff;
   wodurch die Komponente (I) resultiert;
   und
II) Vermischen der Komponente (I) mit mindestens einem Polyisocyanat (E),
   gefunden, bei dem der Polyester (A) herstellbar ist aus
   a1) einem Gemisch, enthaltend
      a11) 40 bis 80 Mol-% mindestens einer aliphatischen oder cycloaliphatischen Polycarbonsäure oder mindestens eines veresterungsfähigen Derivats einer aliphatischen oder cycloaliphatischen Polycarbonsäure oder eines Gemisches mindestens zweier dieser Ausgangsprodukte,
      a12) 20 bis 60 Mol-% mindestens einer aromatischen Polycarbonsäure, mindestens eines veresterungsfähigen Derivats eine aromatischen Polycarbonsäure oder eines Gemisches mindestens zweier dieser Ausgangsprodukte;
      und
   a2) mindestens 60 Mol-% mindestens eines aliphatischen oder cycloaliphatischen Polyols, das im Molekül mindestens ein Strukturelement -C(R¹R²)-CH₂OH, worin die Reste R¹ und R² für aliphatische, cycloaliphatische oder aromatische Kohlenwasserstoffereste mit 1 bis 20 Kohlenstoffatomen oder für Methylolgruppen stehen, enthält, oder eines Gemisches mindestens zweier dieser Ausgangsprodukte.

Im folgenden wird das zweite neue Verfahren zur Herstellung eines Beschichtungsstoffs als "zweites erfindungsgemäßes Herstellverfahren" bezeichnet.

Im Hinblick auf den Stand der Technik war es überraschend und für den Fachmann nicht vorhersehbar, daß die komplexe Aufgabe, die der vorliegenden Erfindung zugrunde liegt, mit Hilfe des erfindungsgemäßen Beschichtungsstoffs gelöst werden konnte. Insbesondere überraschte, daß der erfindungsgemäße Unidecklack hervorragend für die emissionsarme Lackierung größere Objekte wie Nutzfahrzeugkarosserien, bei denen die Zweischichtlackierung nach dem Naß-innaß-Verfahren große Probleme bereitet, geeignet ist und Unidecklackierungen liefert, die sich durch guten Verlauf, Glanz, Decklackstand, Härte und praxisgerechte Lösemittel- und Chemikalienbeständigkeit auszeichnen. Noch mehr überraschte, daß der erfindungsgemäße Beschichtungsstoff, insbesondere der erfindungsgemäße Unidecklack, als stoffliche Grundlage für den erfindungsgemäßen Original-Reparaturlack dienen kann.

Der erfindungsgemäße Beschichtungsstoff kann ein Einkomponenten(1K)-System sein.

Im Rahmen der vorliegenden Erfindung ist unter einem Einkomponenten(1K)-System ein thermisch härtender Beschichtungsstoff zu verstehen, bei dem das Bindemittel und das Vernetzungsmittel nebeneinander, d.h. in einer Komponente, vorliegen. Voraussetzung hierfür ist, daß die beiden Bestandteile erst bei höheren Temperaturen und gegebenenfalls bei Bestrahlen mit aktinischer Strahlung miteinander vernetzen.

Der erfindungsgemäße Unidecklack und Wasserbasislack werden vorzugsweise in dieser Form angewandt.

Der erfindungsgemäße Beschichtungsstoff kann des weiteren ein Zweikomponenten- oder Mehrkomponentensystem, insbesondere aber ein Zweikomponentensystem, sein.

Im Rahmen der vorliegenden Erfindung ist hierunter ein Beschichtungsstoff zu verstehen, bei dem insbesondere das Bindemittel und das Vernetzungsmittel getrennt voneinander in mindestens zwei Komponenten vorliegen, die erst kurz vor der Applikation zusammengegeben werden. Diese Form wird dann gewählt, wenn die Bindemittel und/oder die Löse- und/oder Dispergiermittel mit den Vernetzungsmitteln bereits bei Raumtemperatur reagieren. Beschichtungsstoffe dieser Art werden vor allem zur Beschichtung thermisch empfindlicher Substrate, insbesondere in der Autoreparaturlackierung, angewandt.

Der erfindungsgemäße Original-Reparaturlack wird vorzugsweise in dieser Form angewandt. Wenn der erfindungsgemäße Unidecklack der Beschichtung von Kunststoffteilen dient, wird er ebenfalls vorzugsweise in dieser Form verwendet.

Der erste wesentliche Bestandteil des erfindungsgemäßen Beschichtungsstoffes ist der Polyester (A).

Der Polyester (A) ist erhältlich aus den Ausgangsprodukten (a1) und (a2).

Bei dem erfindungsgemäß zu verwendenden Ausgangsprodukt (a1) handelt es sich um ein Gemisch aus den Ausgangsprodukten (a11) und (a12). Erfindungsgemäß wird das Ausgangsprodukt (a11) in einer Menge von 40 bis 80, vorzugsweise 50 bis 70 und insbesondere 55 bis 65 Mol-% und das Ausgangsprodukt (a12) in einer Menge von 20 bis 60, vorzugsweise 30 bis 50 und insbesondere 35 bis 45 Mol-% eingesetzt.

Das Ausgangsprodukt (a11) ist eine aliphatische oder cycloaliphatische Polycarbonsäure oder ein veresterungsfähiges Derivat oder ein Gemisch mindestens zweier dieser Ausgangsprodukte.

Beispiele geeigneter aliphatischer Polycarbonsäuren (a11) sind lineare oder verzweigte aliphatische Polycarbonsäuren mit 2 bis 80 Kohlenstoffatomen im Molekül sowie deren veresterungsfähigen Derivate, insbesondere deren Anhydride - soweit existent -, Alkylester, Arylester oder Halogenide, insbesondere Chloride.

Beispiele gut geeigneter aliphatischer Polycarbonsäuren (a11) sind Oxalsäure, Malonsäure, Bernsteinsäure, Glutarsäure, Adipinsäure, Pimelinsäure, Korksäure, Azelainsäure, Sebacinsäure, Maleinsäure, Fumarsäure, Itaconsäure, Citraconsäure, Zitronensäure, polymerisierte, insbesondere dimerisierte, Fettsäuren sowie deren vorstehend genannten veresterungsfähigen Derivate.

Polymerisierte, insbesondere dimerisierte, Fettsäuren sind erhältlich, indem Fettsäuren wie Linolsäure, Linolensäure und/oder Ölsäuregegebenenfalls im Gemisch mit gesättigten Fettsäuren polymerisiert werden. Es resultiert ein. Gemisch, das je nach Reaktionsführung hauptsächlich dimere, aber auch monomere und trimere Moleküle sowie Nebenprodukte enthält. Üblicherweise wird das Reaktionsgemisch destillativ gereinigt. Handelsübliche polymere Fettsäuren (auch Dimerfettsäuren genannt) enthalten mindestens 80 Gew.-%, insbesondere 98 Gew.-%, dimere Fettsäuren, bis zu 20 Gew.-% trimere Fettsäuren und höchstens 1 Gew.-% monomere Fettsäuren. Sie enthalten sowohl cyclische als auch lineare aliphatische Molekülefragmente. Im Rahmen der vorliegenden Erfindung werden sie indes nicht als cycloaliphatische, sondern als lineare aliphatische Polycarbonsäuren (a11) angesehen.

Beispiele geeigneter cycloaliphatischer Polycarbonsäuren (a11) sind 1,2-Cyclobutandicarbonsäure, 1,3-Cyclobutandicarbonsäure, 1,2-Cyclopentandicarbonsäure, 1,3-Cyclopentandicarbonsäure, Hexahydrophthalsäure, 1,3-Cyclohexandicarbonsäure, 1,4-Cyclohexandicarbonsäure, 4-Methylhexahydrophthalsäure, Tricyclodecandicarbonsäure, Tetrahydrophthalsäure oder 4-Methyltetrahydrophthalsäure. Sie können sowohl in ihrer cis- als auch in ihrer trans-Form sowie als Gemisch beider Formen eingesetzt werden.

Das Ausgangsprodukt (a12) ist eine aromatische Polycarbonsäuren oder ein veresterungsfähiges Derivat oder ein Gemisch mindestens zweier dieser Ausgangsprodukte (a12).

Beispiele gut geeigneter Ausgangsprodukte (a12) sind Phthalsäure, Isophthalsäure, Terephthalsäure, Pyromellithsäure, Trimellithsäure, Naphthalindicarbonsäuren, Naphthalintricarbonsäuren oder Naphthalintetracarbonsäuren, Halogenphthalsäuren wie Tetrachlor- bzw.

Tetrabromphthalsäure sowie die veresterungsfähigen Derivate dieser Säuren, insbesondere deren Anhydride - soweit existent -, Alkylester, Arylester oder Halogenide, insbesondere Chloride.

Erfindungsgemäß werden vor allem die Dicarbonsäuren (a1) und/oder ihre veresterungsfähigen Derivate verwendet. Die Tri- und/oder Tetracarbonsäuren (a1) und/oder ihre veresterungsfähigen Derivate werden verwendet, um Verzweigungen in die erfindungsgemäß zu verwendenden Polyester (A) einzuführen. Im Rahmen der vorliegenden Erfindung werden sie in solchen Mengen eingesetzt, die nicht zum Gelieren der erfindungsgemäß zu verwendenden Polyester (A) führen.

Bei dem erfindungsgemäß zu verwendenden Ausgangsprodukt (a2) handelt es sich um ein cycloaliphatisches oder aliphatisches Polyol oder um ein Gemisch mindestens zweier dieser Ausgangsprodukte (a2).

Beispiele geeigneter Polyole (a2) sind Diole, Triole und Tetrole, insbesondere Diole. Üblicherweise werden Triole und Tetrole neben den Diolen in untergeordneten Mengen verwendet, um Verzweigungen in die erfindungsgemäß zu verwendenden Polyester (A) einzuführen. Im Rahmen der vorliegenden Erfindung sind unter untergeordneten Mengen solche Mengen an Triolen und Tetrolen zu verstehen, welche nicht zum Gelieren der erfindungsgemäß zu verwendenden Polyester (A) führen.

Das Polyol (a2) enthält im Molekül mindestens ein Strukturelement -C(R¹R²)-CH₂OH, worin die Reste R¹ und R² für aliphatische, cycloaliphatische oder aromatische Kohlenwasserstoffreste mit 1 bis 20 Kohlenstoffatomen oder für Methylolgruppen stehen.

Im Rahmen der vorliegenden Erfindungen sind unter aliphatischen, cycloaliphatischen oder aromatischen Kohlenwasserstoffresten substituierte oder unsubstituierte Alkyl-, Cycloalkyl-, Alkylcycloalkyl-, Cycloalkylalkyl-, Aryl-, Alkylaryl-, Cycloalkylaryl- Arylalkyl- oder Arylcycloalkylreste zu verstehen.

Beispiele geeigneter Alkylreste sind Methyl, Ethyl, Propyl, Isopropyl, n-Butyl, iso-Butyl, tert.-Butyl, Amyl, Hexyl, Heptyl, Octyl, 2-Ethylhexyl, Isooctyl, Nonyl, Decyl, Undecyl, Dodecyl, Tridecyl, Tetradecyl, Pentadecyl, Hexadecyl, Heptadecyl, Octadecyl, Nonadecyl oder Eicosanyl.

Beispiele geeigneter Cycloalkylreste sind Cyclobutyl, Cyclopentyl, Cyclohexyl, Bicyclo[2.2.1]heptyl, Bicyclo[3.2.1]octyl oder Tricyclodecyl.

Beispiele geeigneter Alkylcycloalkylreste sind Methylencyclohexan, Ethylencyclohexan oder Propan-1,3-diyl-cyclohexan.

Beispiele geeigneter Cycloalkylalkylreste sind 2-, 3- oder 4-Methyl-, -Ethyl-, -Propyl- oder -Butylcyclohex-1-yl.

Beispiele geeigneter Arylreste sind Phenyl, Naphthyl oder Biphenylyl.

Beispiele geeigneter Alkylarylreste sind Benzyl-, Ethylen- oder Propan-1,3-diylbenzol.

Beispiele geeigneter Cycloalkylarylreste sind 2-, 3-, oder 4-Phenylcyclohex-1-yl.

Beispiele geeigneter Arylalkylreste sind 2-, 3- oder 4-Methyl-, -Ethyl-, -Propyloder -Butylphen-1-yl.

Beispiele geeigneter Arylcycloalkylreste sind 2-, 3- oder 4-Cyclohexylphen-1-yl.

Die vorstehend beschriebenen Reste R¹ und/oder R² können substituiert sein. Hierzu können elektronenziehende oder elektronenschiebende Atome oder organische Reste verwendet werden.

Beispiele geeigneter Substitutienten sind Halogenatome, insbesondere Chlor und Fluor, partiell oder vollständig halogenierte, insbesondere chlorierte und/oder fluorierte, Alkyl-, Cycloalkyl-, Alkylcycloalkyl-, Cycloalkylalkyl-, Aryl-, Alkylaryl-, Cycloalkylaryl- Arylalkyl- und Arylcycloalkylreste, inclusive der vorstehend beispielhaft genannten, insbesondere tert.-Butyl; oder Aryloxy-, Alkyloxy- und Cycloalkyloxyreste, insbesondere Phenoxy, Naphthoxy, Methoxy, Ethoxy, Propxy, Butyloxy oder Cyclohexyloxy.

Beispiele besonders gut geeigneter Diole (a2) sind Hydroxypivalinsäureneopentylglykolester, 2,2,4-Trimethylpentandiol-1,5, 2,2,5-Trimethylhexandiol-1,6, Cyclohexan-1,1-dimethylol oder Cyclohexan-1,4-dimethyl-1,4-dimethylol.

Weitere Beispiele besonders gut geeigneter Diole (a2) sind die Diole der allgemeinen Formel a2I 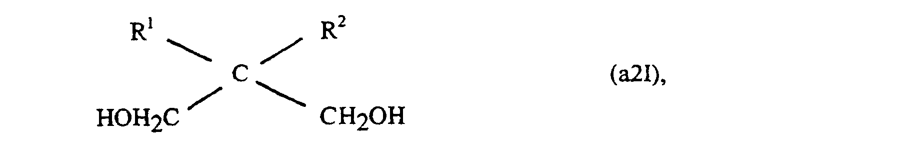 worin die Reste R¹ und R² die vorstehend angegebene Bedeutung haben.

Beispiele ganz besonders gut geeigneter Diole (a2) der allgemeinen Formel a2I sind Neopentylglykol, 2-Methyl-2-ethylpropandiol-1,3, 2-Methyl-2-propylpropandiol-1,3, 2-Methyl-2-phenylpropandiol-1,3, 2-Methyl-2-cyclohexylpropandiol-1,3, 2-Butyl-2-ethylpropandiol-1,3, 2-Butyl-2-methylpropandiol-1,3, 2-Phenyl-2-methylpropan-diol-1,3, 2-Propyl-2-ethylpropandiol-1,3, 2-Di-tert.-butylpropandiol-1,3, 2-Butyl-2-propylpropandiol-1,3, 2,2-Diethylpropandiol-1,3, oder 2,2-Dipropylpropandiol-1,3.

Beispiele gut geeigneter Triole (a2) sind Trimethylolethan und Trimethylolpropan, insbesondere Trimethylolpropan.

Beispiele gut geeigneter Tetrole (a2) sind Pentaerythrit und Homopentaerythrit.

Der erfindungsgemäß zu verwendende Polyester (A) weist eine lineare oder verzweigte Kette auf. Erfindungsgemäß ist es von Vorteil, verzweigte Polyester (A) zu verwenden. Vorzugsweise liegt der Verzweigungsgrad des Polyesters (A) bei 1,0 bis 2,0, bevorzugt 1,2 bis 1,9 und insbesondere 1,4 bis 1,8 mol/kg.

Das Molekulargewicht des erfindungsgemäß zu verwendenden Polyesters (A) kann breit variieren. Es ist indes von Vorteil, wenn er ein zahlenmittleres Molekulargewicht von 650 bis 2.500, vorzugsweise 800 bis 2.250 und insbesondere 1.000 bis 2.000 Dalton aufweist.

Ebenso können die Säurezahl und die Hydroxylzahl des erfindungsgemäß zu verwendenden Polyesters (A) breit variieren. Es ist indes von Vorteil, wenn er eine Säurezahl von 25 bis 55, vorzugsweise 27 bis 50 und insbesondere 27 bis 40 mg KOH/g aufweist. Des weiteren ist es von Vorteil, wenn die Hydroxylzahl bei 80 bis 180, vorzugsweise 100 bis 170 und insbesondere 120 bis 160 mg KOH/g liegt.

Herstellung des erfindungsgemäß zu verwendenden Polyesters (A) weist keine methodischen Besonderheiten auf, sondern erfolgt nach den üblichen und bekannten Methoden der Polyesterchemie durch die Umsetzung der Ausgangsprodukte (a1) und (a2). Erfindungsgemäß ist es hierbei von Vorteil, wenn die Ausgangsprodukte (a1) und (a2) in einem molaren Verhältnis von (a1): (a2) = (1,1 - 2) : 1, vorzugsweise (1,2 - 1,7) : 1 und insbesondere ( 1,25 - 1,6): 1 miteinander umgesetzt werden. Vorzugsweise liegen die Reaktionstemperaturen bei 140 bis 240 und insbesondere 180 bis 220 °C. Vorteilhafterweise wird zum Auskreisen von Reaktionswasser ein Schleppmittel wie Cyclohexan verwendet. In manchen Fällen ist es zweckmäßig, die Veresterungsreaktion zu katalysieren. Beispiele geeigneter Katalysatoren sind heterogene Katalysatoren wie Übergangsmetalloxide und Seltenerdoxide oder homogene Katalysatoren wie Tetrabutyltitanat, Zinkoctoat oder Dibutylzinnoxid.

Bei ihrer Herstellung oder bei ihrer Dispergierung in einem wässrige Medium werden die erfindungsgemäß zu verwendenden Polyester (A) neutralisiert. Beispiele geeigneter Neutralisationsmittel sind die nachstehend beschriebenen zur Neutralisation der in Anionen umwandelbaren funktionellen Gruppen (b32) geeigneten Verbindungen. Hiervon werden vorzugsweise die leicht flüchtigen Amine sowie die Alkanolamine, insbesondere aber die Alkanolamine, verwendet.

Der zweite wesentliche Bestandteil des erfindungsgemäßen Beschichtungsstoffs ist mindestens ein wasserlösliches oder -dispergierbares Polyurethanacrylat (B). Hierbei handelt es sich um mindestens ein mit olefinisch ungesättigten Monomeren gepfropftes, ionisch und/oder nichtionisch stabilisiertes Polyurethan mit lateralen und/oder terminalen olefinisch ungesättigten Gruppen. Es ist erhältlich, indem man in einer wäßrigen Dispersion in der Gegenwart
B1) mindestens eines dispergierten Polyurethanharzes, das erhältlich ist aus
   b1) mindestens einem Polyisocyanat gegebenenfalls zusammen mit mindestens einem Monoisocyanat;
   b2) mindestens einem Polyester- und/oder Polyetherpolyol mit einem zahlenmittleren Molekulargewicht von 400 bis 5.000;
   b3) mindestens einer Verbindung, die
      b31) mindestens eine gegenüber Isocyanatgruppen reaktive Gruppe sowie
      b32) mindestens eine anionische und/oder durch Neutralisationsmittel in Anionen überführbare Gruppe und/oder
      b33) mindestens eine nichtionische hydrophile Gruppe enthält;
      sowie
   b4) mindestens einer Verbindung, die
      b41) mindestens eine gegenüber Isocyanatgruppen reaktive Gruppe und
      b42) mindestens eine olefinisch ungesättigte Gruppe enthält;
B2) mindestens ein olefinisch ungesättigtes Monomer
radikalisch polymerisiert, wobei das Gewichtsverhältnis von Polyurethanharz (B 1) zu olefinisch ungesättigtem Monomer (B2) vorzugsweise bei 1 : 10 bis 10 : 1 liegt.

Vorteilhafterweise weist das Polyurethan (B1) je nach Art der Stabilisierung eine Säurezahl oder Aminzahl von 10 bis 250 mg KOH/g (ionische Stabilisierung oder nichtionische plus ionische Stabilisierung) oder von 0 bis 10 mg KOH/g (nichtionische Stabilisierung), eine OH-Zahl von 30 bis 350 mg KOH/g und ein. zahlenmittleres Molekulargewicht von 1.500 bis 55.000 Dalton auf. Vorteilhafterweise liegt der Gehalt an olefinisch ungesättigten Doppelbindungen im statistischen Mittel bei 0,2 bis 3, vorzugsweise 0,4 bis 2 und insbesondere 0,5 bis 1,5 pro Molekül.

Beispiele geeigneter Polyisocyanate (b1) sind Diisocyanate (b1) und Triisocyanate (b1). Vorteilhafterweise werden Diisocyanate (b1) verwendet. Die Triisocyanate (b1) werden in untergeordneten Mengen verwendet, um Verzweigungen in die Molekülketten einzuführen. Im Rahmen der vorliegenden Erfindung sind unter untergeordneten Mengen solche Mengen zu verstehen, die kein Gelieren des Polyurethans (B1) hervorrufen. In manchen Fällen erweist es sich als vorteilhaft, kettenabrechende Monoisocyanate (b1) zu verwenden.

Beispiele gut geeigneter Diisocyanate (b1) sind Isophorondiisocyanat (= 5-Isocyanato-1-isocyanatomethyl-1,3,3-trimethyl-cyclohexan), 5-Isocyanato-1-(2-isocyanatoeth-1-yl)-1,3,3-trimethyl-cyclohexan, 5-Isocyanato-1-(3-isocyanatoprop-1-yl)-1,3,3-trimethyl-cyclohexan, 5-Isocyanato-(4-isocyanatobut-1-yl)-1,3,3-trimethyl-cyclohexan, 1-Isocyanato-2-(3-isocyanatoprop-1-yl)-cyclohexan, 1-Isocyanato-2-(3-isocyanatoeth-1-yl)cyclohexan, 1-Isocyanato-2-(4-isocyanatobut-1-yl)-cyclohexan, 1,2-Diisocyanatocyclobutan, 1,3-Diisocyanatocyclobutan, 1,2-Düsocyanatocyclopentan, 1,3-Diisocyanatocyclopentan, 1,2-Diisocyanatocyclohexan, 1,3-Diisocyanatocyclohexan, 1,4- Diisocyanatocyclohexan, Dicyclohexylmethan-2,4'diisocyanat, Trimethylendiisocyanat, Tetramethylendiisocyanat, Pentamethylendiisocyanat, Hexamethylendiisocyanat, Ethylethylendiisocyanat, Trimethylhexandiisocyanat, Heptanmethylendiisocyanat oder Diisocyanate, abgeleitet von Dimerfettsäuren, wie sie unter der Handelsbezeichnung DDI 1410 von der Firma Henkel vertrieben und in den Patentschriften WO 97/49745 und WO 97/49747 beschrieben werden, insbesondere 2-Heptyl-3,4-bis(9-isocyanatononyl)-1-pentyl-cyclohexan, oder 1,2-, 1,4- oder 1,3-Bis(isocyanatomethyl)cyclohexan, 1,2-, 1,4- oder 1,3-Bis(2-isocyanatoeth-1-yl)cyclohexan, 1,3-Bis(3-isocyanatoprop-1-yl)cyclohexan, 1,2-, 1,4- oder 1,3-Bis(4-isocyanatobut-1-yl)cyclohexan, flüssiges Bis(4-isocyanatocyclohexyl)methan eines trans/trans-Gehalts von bis zu 30 Gew.-%, vorzugsweise 25 Gew.-% und insbesondere 20 Gew.-%, wie es den Patentschriften DE-A-44 14 032, GB-A-1220717, DE-A-16 18 795 oder DE-A-17 93 785 beschrieben wird; Toluylendiisocyanat, Xylylendiisocyanat, Bisphenylendiisocyanat, Naphthylendiisocyanat oder Diphenylmethandiisocyanat.

Beispiele gut geeigneter Triisocyanate (b1) sind die Isocyanurate der vorstehend beschriebenen Diisocyanate (b1).

Beispiele gut geeigneter Monoisocyanate (b1) sind Phenylisocyanat, Cyclohexylisocyanat oder Stearylisocyanat.

Die Polyesterpolyole (b2) weisen ein zahlenmittleres Molekulargewicht von 400 bis 5.000 auf.

Beispiele geeigneter Polyesterpolyole (b2) sind gesättigte oder olefinisch ungesättigte Polyesterpolyole (b2), welche durch Umsetzung von
- gegebenenfalls sulfonierten gesättigen und/oder ungesättigten Polycarbonsäuren oder deren veresterungsfähigen Derivaten, gegebenenfalls zusammen mit Monocarbonsäuren, sowie
- gesättigten und/oder ungesättigten Polyolen, gegebenenfalls zusammen mit Monoolen, hergestellt werden.

Beispiele für geeigente Polycarbonsäuren sind aromatische, aliphatische und cycloaliphatische Polycarbonsäuren. Bevorzugt werden aromatische und/oder aliphatische Polycarbonsäuren eingesetzt.

Beispiele gut geeigneter aliphatischer und cycloaliphatischer Polycarbonsäuren sind die vorstehend beschriebenen Ausgangsprodukte (a11).

Beispiele gut geeigneter aromatischer Polycarbonsäuren sind die vorstehend beschriebenen Ausgangsprodukte (a 12).

Gegebenenfalls können zusammen mit den Polycarbonsäuren auch Monocarbonsäuren eingesetzt werden, wie beispielsweise Benzoesäure, tert.-Butylbenzoesäure, Laurinsäure, Isononansäure, Fettsäuren natürlich vorkommender Öle, Acrylsäure, Methacrylsäure, Ethacrylsäure oder Crotonsäure. Bevorzugt wird als Monocarbonsäure Isononansäure eingesetzt.

Beispiele gut geeigneter Polyole sind die vorstehend beschriebenen Diole, Triole und Tetrole (a2) insbesondere die Diole. Üblicherweise werden Triole und/oder Tetrole neben den Diolen in untergeordneten Mengen verwendet, um Verzweigungen in die Polyesterpolyole (b2) einzuführen.

Weitere Beispiele gut geeigneter Diole sind Ethylenglykol, 1,2- oder 1,3-Propandiol, 1,2-, 1,3- oder 1,4-Butandiol, 1,2-, 1,3-, 1,4- oder 1,5-Pentandiol, 1,2-, 1,3-, 1,4-, 1,5- oder 1,6-Hexandiol, Diethylenglykol, 1,2-, 1,3- oder 1,4-Cyclohexandiol, 1,2-, 1,3- oder 1,4-Cyclohexandimethanol oder die stellungsisomeren Diethyloctandiole.

Weitere Beispiele gut geeigneter Diole sind Diole der Formel b2I: 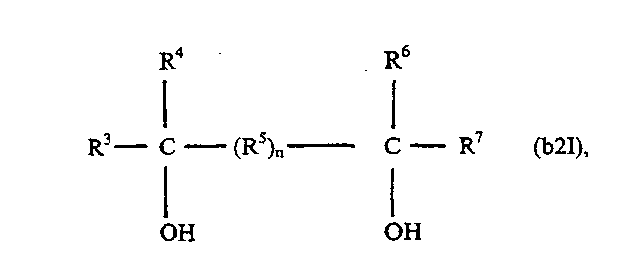 in der R³, R⁴, R⁶ und R⁷ jeweils gleiche oder verschiedene Reste darstellen und für einen Alkylrest mit 1 bis 6 C-Atomen, einen Cycloalkylrest oder einen Arylrest stehen und R⁵ einen Alkylrest mit 1 bis 6 C-Atomen, einen Arylrest oder einen ungesättigten Alkylrest mit 1 bis 6 C-Atomen darstellt, und n entweder 0 oder 1 ist.

Beispiele geeigneter Alkylreste, Cycloalkylreste oder Arylreste werden vorstehend beschrieben.

Beispiele geeigneter ungesättigter Alkylreste sind die vorstehend beschriebenen Alkylreste, die mindestens eine olefinisch ungesättigte Doppelbindung in der Kette enthalten.

Als Diole II der allgemeinen Formel II können beispielsweise 2,5-Dimethylhexandiol-2,5, 2,5-Diethylhexandiol-2,5, 2-Ethyl-5-methylhexandiol-2,5, 2,4-Dimethylpentandiol-2,4, 2,3-Dimethylbutandiol-2,3, 1,4-(2'-Hydroxypropyl)-benzol und 1,3-(2'-Hydroxypropyl)-benzol eingesetzt werden.

Von all diesen Diolen sind Hexandiol-1,6 und Neopentylglykol besonders vorteilhaft und werden deshalb besonders bevorzugt verwendet.

Diese Diole können auch als solche neben den Polyesterpolyolen und/oder Polyetherpolyolen (b2) für die Herstellung der Polyurethane (B1) eingesetzt werden.

Ein weiteres Beispiel für ein geeignetes Triol ist Glycerin.

Die Triole können auch als solche neben den Polyesterpolyolen und/oder Polyetherpolyolen (b2) für die Herstellung der Polyurethane (B1) eingesetzt werden (vgl. die Patentschrift EP-A-0 339 433).

Gegebenenfalls können untergeordnete Mengen von kettenabrechenden Monoolen mit verwendet werden. Beispiele geeigneter Monoole sind Alkohole oder Phenole wie Ethanol, Propanol, n-Butanol, sec- Butanol, tert-Butanol, Amylalkohole, Hexanole, Fettalkohole, Allylalkohol oder Phenol.

Die Herstellung der Polyesterpolyole (b2) kann, wie vorstehend bei den Polyestern (A) beschrieben, erfolgen.

Weitere Beispiele geeigneter Polyesterpolyole (b2) sind Polyesterdiole (b2), die durch Umsetzung eines Lactons mit einem Diol erhalten werden. Sie zeichnen sich durch die Gegenwart von endständigen Hydroxylgruppen und wiederkehrenden Polyesteranteilen der Formel -(-CO-(CHR⁸)ₘ- CH₂-O-)- aus. Hierbei ist der Index m bevorzugt 4 bis 6 und der Substitutent R⁸ = Wasserstoff, ein Alkyl-, Cycloalkyl- oder Alkoxy-Rest. Kein Substituent enthält mehr als 12 Kohlenstoffatome. Die gesamte Anzahl der Kohlenstoffatome im Substituenten übersteigt 12 pro Lactonring nicht. Beispiele hierfür sind Hydroxycapronsäure, Hydroxybuttersäure, Hydroxydecansäure und/oder Hydroxystearinsäure.

Für die Herstellung der Polyesterdiole wird das unsubstituierte Caprolacton, bei dem m den Wert 4 hat und alle R⁸-Substituenten Wasserstoff sind, bevorzugt.

Die Umsetzung mit Lacton wird durch niedermolekulare Polyole wie Ethylenglykol, 1,3-Propandiol, 1,4-Butandiol oder Dimethylolcyclohexan gestartet. Es können jedoch auch andere Reaktionskomponenten, wie Ethylendiamin, Alkyldialkanolamine oder auch Harnstoff mit Caprolacton umgesetzt werden. Als höhermolekulare Diole eignen sich auch Polylactamdiole, die durch Reaktion von beispielsweise Caprolactam mit niedermolekularen Diolen hergestellt werden.

Beispiele geeigneter Polyetherpolyole (b2) sind Polyetherdiole (b2) der allgemeinen Formel H-(-O-(CHR⁹)ₒ-)ₚOH, wobei der Substituent R⁹ = Wasserstoff oder ein niedriger, gegebenenfalls substituierter Alkylrest ist, der Index o = 2 bis 6, bevorzugt 3 bis 4, und der Index p = 2 bis 100, bevorzugt 5 bis 50, ist. Als besonders gut geeignete Beispiele werden lineare oder verzweigte Polyetherdiole wie Poly(oxyethylen)glykole, Poly(oxypropylen)glykole und Poly(oxybutylen)glykole genannt.

Die Polyetherdiole sollen einerseits keine übermäßigen Mengen an Ethergruppen einbringen, weil sonst die gebildeten erfindungsgemäß zu verwendenden Polyurethanacrylate (B) in Wasser anquellen. Andererseits können sie in Mengen verwendet werden, welche die nichtionische Stabilisierung der Polyurethanacrylate (B) gewährleistet. Sie dienen dann als die nachstehend beschriebenen funktionellen nichtionischen Gruppen (b34).

Das Polyurethan (B1) enthält
(b32) funktionelle Gruppen, die durch Neutralisationsmittel in Anionen überführt werden können, und/oder anionische Gruppen
   und/oder
(b34) nichtionische hydrophile Gruppen.

Beispiele geeigneter funktioneller Gruppen (b32) die durch Neutralisationsmittel in Anionen überführt werden können, sind Carbonsäure-, Sulfonsäure- oder Phosphonsäuregruppen, insbesondere Carbonsäuregruppen.

Beispiele geeigneter erfindungsgemäß zu verwendender anionischer Gruppen (b32) sind Carboxylat-, Sulfonat- oder Phosphonatgruppen, insbesondere Carboxylatgruppen.

Beispiele für geeignete Neutralisationsmittel für in Anionen umwandelbare funktionelle Gruppen (b32) sind Ammoniak, Ammoniumsalze, wie beispielsweise Ammoniumcarbonat oder Ammoniumhydrogencarbonat, sowie Amine, wie z.B. Trimethylamin, Triethylamin, Tributylamin, N-Methyl-, N-Ethyl-, N-Propyl- oder N-Butylmorpholin, Dimethylanilin, Diethylanilin, Triphenylamin, Dimethylethanolamin, Diethylethanolamin, Methyldiethanolamin, Triethanolamin und dergleichen. Die Neutralisation kann in organischer Phase oder in wäßriger Phase erfolgen. Bevorzugt wird als Neutralisationsmittel Dimethylethanolamin eingesetzt.

Die eingesetzte Menge an Neutralisationsmittel wird so gewählt, daß 1 bis 100 Äquivalente, bevorzugt 50 bis 90 Äquivalente der funktionellen Gruppen (b32) oder (b33) des Polyurethans (B1) oder des Polyurethanacrylats (B) neutralisiert werden.

Die Einführung von (potentiell) anionischen Gruppen (b32) in die Polyurethanmoleküle erfolgt über den Einbau von Verbindungen (b3), die mindestens eine gegenüber Isocyanatgruppen reaktive Gruppe (b31) im Molekül enthalten; die einzusetzende Menge kann aus der angestrebten Säurezahl berechnet werden.

Beispiele gut geeigneter Verbindungen (b3) sind solche, die zwei gegenüber Isocyanatgruppen reaktive Gruppen (b31) im Molekül enthalten. Geeignete gegenüber Isocyanatgruppen reaktive Gruppen (b31 ) sind insbesondere Hydroxylgruppen, sowie primäre und/oder sekundäre Aminogruppen. Demnach können beispielsweise Alkansäuren mit zwei Substituenten am Kohlenstoffatom eingesetzt werden. Der Substituent kann eine Hydroxylgruppe, eine Alkylgruppe oder bevorzugt eine Alkylolgruppe sein. Diese Alkansäuren haben mindestens eine, im allgemeinen 1 bis 3 Carboxylgruppen im Molekül. Sie haben 2 bis etwa 25, vorzugsweise 3 bis 10 Kohlenstoffatome. Beispiele geeigneter Alkansäuren sind Dihydroxypropionsäure, Dihydroxybemsteinsäure und Dihydroxybenzoesäure. Eine besonders bevorzugte Gruppe von Alkansäuren sind die Dimethylolalkansäuren der allgemeinen Formel R¹⁰-C(CH₂OH)₂COOH, wobei R¹⁰ für ein Wasserstoffatom oder eine Alkylgruppe mit bis zu etwa 20 Kohlenstoffatomen steht. Beispiele besonders gut geeigneter Alkansäuren sind 2,2-Dimethylolessigsäure, 2,2-Dimethylolpropionsäure, 2,2-Dimethylolbuttersäure und 2,2-Dimenthylolpentansäure. Die bevorzugte Dihydroxyalkansäure ist 2,2-Dimethylolpropionsäure. Aminogruppenhaltige Verbindungen sind beispielsweise Diaminovaleriansäure, 3,4-Diaminobenzoesäure, 2,4-Diaminotoluolsulfonsäure und 2,4-Diaminodiphenylethersulfonsäure.

Nichtionische stabilisierende Poly(oxyalkylen)gruppen (b33) können als laterale oder endständige Gruppen in die Polyurethanmoleküle eingeführt werden. Hierfür können beispielsweise Alkoxypoly(oxyalkylen)alkohole mit der allgemeinen Formel R¹¹O-(-CH₂-CH¹²-O-)ᵣ H in der R¹¹ für einen Alkylrest mit 1 bis 6 Kohlenstoffatomen, R¹² für ein Wasserstoffatom oder einen Alkylrest mit 1 bis 6 Kohlenstoffatomen und der Index r für eine Zahl zwischen 20 und 75 steht, eingesetzt werden. (vgl. die Patentschriften EP-A-0 354 261 oder EP-A-0 424 705).

Das Polyurethan (B1) enthält olefinisch ungesättigte Gruppen (b42). Vorteilhafterweise werden sie mit Hilfe mindestens einer Verbindung (b4) eingeführt, die mindestens eine gegenüber Isocyanatgruppen reaktive Gruppe (b41) und mindestens eine olefinisch ungesättigte Gruppe (b42) enthält. Beispiele geeigneter Gruppen (b41) sind die vorstehend genannten Gruppen (b31). Beispiele geeigneter Gruppen (b42) sind acrylische, vinylische oder allylische Doppelbindungen. Beispiele geeigneter Verbindungen (b4) sind Hydroxy(meth)acrylate, insbesondere Hydroxyalkyl(meth)acrylate wie Hydroxyethyl-, Hydroxypropyl-, oder Hydroxyhexyl(meth)acrylat oder 2,3-Dihydroxypropyl(meth)acrylat), 2,3-Dihydroxypropylmonoallylether, 2,3-Dihydroxypropansäureallylester, Glycerinmono(meth)acrylat, Glycerinmonoallylether, Pentaerythritmono(meth)acrylat, Pentaerythritdi(meth)acrylat, Pentaerythritmonoallylether, Pentaerythritdiallylether, Trimethylolpropanmonoallylether, Trimethylolpropanmono(meth)acrylat und Trimethylolpropandiallylether. Beispiele gut geeigneter Verbindungen (b4) sind Trimethylolpropanmonoallylether, Glycerinmono(meth)acrylat, Pentaerythritdi(meth)acrylat, Pentaerythritdiallylether, Glycerinmonoallylether und Trimethylolpropanmono(meth)acrylat, insbesondere aber Trimethylolpropanmonoallylether, Glycerinmonoallylether und 2,3-Dihydroxypropansäureallylester. Vorzugsweise werden die Verbindungen (b4), die mindestens zwei Gruppen (b41) enthalten, in die Kette der Polyurethanmoleküle (B 1) eingebaut.

Das Polyurethan (B1) kann vor oder nach seiner Umsetzung mit den olefinisch ungesättigten Monomeren (B2) kettenverlängert werden. Beispiele geeigneter Kettenverlängerungsmittel sind Polyole, Polyamine und Aminoalkohole.

Geeignete Polyole für die Kettenverlängerung sind Polyole mit bis zu 36 Kohlenstoffatomen je Molekül wie Ethylenglykol, Diethylenglykol, Triethylenglykol, 1,2-Propandiol, 1,3-Propandiol, 1,4-Butandiol, 1,2-Butylenglykol, 1,6-Hexandiol, Trimethylolpropan, Ricinusöl oder hydriertes Ricinusöl, Di-trimethylolpropanether, Pentaerythrit, 1,2-Cyclohexandiol, 1,4-Cyclohexandimethanol, Bisphenol A, Bisphenol F, Neopentylglykol, Hydroxypivalinsäure-neopentylglykolester, hydroxyethyliertes oder hydroxypropyliertes Bisphenol A, hydriertes Bisphenol A oder deren Mischungen (vgl. Patentschriften EP-A- 0 339 433, EP-A- 0 436 941, EP-A- 0 517 707).

Beispiele geeigneter Polyamine weisen mindestens zwei primäre und/oder sekundäre Aminogruppen auf Polyamine sind im wesentlichen Alkylenpolyamine mit 1 bis 40 Kohlenstoffatomen, vorzugsweise etwa 2 bis 15 Kohlenstoffatomen. Sie können Substituenten tragen, die keine mit Isocyanat-Gruppen reaktionsfähige Wasserstoffatome haben. Beispiele sind Polyamine mit linearer oder verzweigter aliphatischer, cycloaliphatischer oder aromatischer Struktur und wenigstens zwei primären Aminogruppen.

Als Diamine sind zu nennen Hydrazin, Ethylendiamin, Propylendiamin, 1,4-Butylendiamin, Piperazin, 1,4-Cyclohexyldimethylamin, Hexamethylendiamin-1,6, Trimethylhexamethylendiamin, Methandiamin, Isophorondiamin, 4,4'-Diaminodicyclohexylmethan und Aminoethylenethanolamin. Bevorzugte Diamine sind Hydrazin, Alkyl- oder Cycloalkyldiamine wie Propylendiamin und 1-Amino-3-aminomethyl-3,5,5-trimethylcyclohexan.

Es können auch Polyamine eingesetzt werden, die mehr als zwei Aminogruppen im Molekül enthalten. In diesen Fällen ist jedoch - z.B. durch Mitverwendung von Monoaminen - darauf zu achten, daß keine vernetzten Polyurethanharze erhalten werden. Solche brauchbaren Polyamine sind Diethylentriamin, Triethylentetramin, Dipropylentriamin und Dibutylentriamin. Als Beispiel für ein Monoamin ist Ethylhexylamin zu nennen (vgl. die Patentschrift EP-A- 0 089 497).

Beispiele geeigneter Aminoalkohole sind Ethanolamin oder Diethanolamin.

Die Polyurethane (B1) werden mit mindestens einem olefinisch ungesättigten Monomeren (B2) umgesetzt, wodurch die erfindungsgemäß zu verwendenden Polyurethanacrylate (B) resultieren. Vorzugsweise werden hierbei die Bedingungen der radikalischen Polymerisation in Emulsion oder Dispersion angewandt.

Beispiele geeigneter Monomere (B2) sind
B21) im wesentlichen säuregruppenfreien (Meth)Acrylsäureester wie (Meth)Acrylsäurealkyl- oder -cycloalkylester mit bis zu 20 Kohlenstoffatomen im Alkylrest, insbesondere Methyl-, Ethyl-, Propyl-, n-Butyl-, sec.-Butyl-, tert.-Butyl-, Hexyl-, Ethylhexyl-, Stearyl- und Laurylacrylat oder -methacrylat; cycloaliphatische (Meth)Acrylsäureester, insbesondere Cyclohexyl-, Isobornyl-, Dicyclopentadienyl-, Octahydro-4,7-methano-1H-inden-methanol- oder tert.-Butylcyclohexyl(meth)acrylat; (Meth)Acrylsäureoxaalkylester oder -oxacycloalkylester wie Ethyltriglykol(meth)acrylat und Methoxyoligoglykol(meth)acrylat mit einem Molekulargewicht Mn von vorzugsweise 550 oder andere ethoxylierte und/oder propoxylierte hydroxylgruppenfreie (Meth)Acrylsäurederivate. Diese können in untergeordneten Mengen höherfunktionelle (Meth)Acrylsäurealkyl- oder -cycloalkylester wie Ethylengylkol-, Propylenglykol-, Diethylenglykol-, Dipropylenglykol-, Butylenglykol-, Pentan-1,5-diol-, Hexan-1,6-diol-, Octahydro-4,7-methano-1H-inden-dimethanol- oder Cyclohexan-1,2-, -1,3- oder -1,4-diol-di(meth)acrylat; Trimethylolpropan-di- oder -tri(meth)acrylat; oder Pentaerythrit-di-, -tri- oder -tetra(meth)acrylat enthalten. Im Rahmen der vorliegenden Erfindung sind hierbei unter untergeordneten Mengen an höherfunktionellen Monomeren solche Mengen zu verstehen, welche nicht zur Vernetzung oder Gelierung der Copolymerisate (A) führen.
B22) Monomere, welche mindestens eine Hydroxylgruppe, Aminogruppe, Alkoxymethylaminogruppe oder Iminogruppe pro Molekül tragen und im wesentlichen säuregruppenfrei sind, wie Hydroxyalkylester der Acrylsäure, Methacrylsäure oder einer anderen alpha,beta-olefinisch ungesättigten Carbonsäure, die sich von einem Alkylenglykol ableiten, das mit der Säure verestert ist, oder die durch Umsetzung der alpha,betaolefinsich ungesättigten Carbonsäure mit einem Alkylenoxid erhältlich sind, insbesondere Hydroxyalkylester der Acrylsäure, Methacrylsäure, Ethacrylsäure, Crotonsäure, Maleinsäure, Fumarsäure oder Itaconsäure, in denen die Hydroxyalkylgruppe bis zu 20 Kohlenstoffatome enthält, wie 2-Hydroxyethyl-, 2-Hydroxypropyl-, 3-Hydroxypropyl-, 3-Hydroxybutyl-, 4-Hydroxybutylacrylat, -methacrylat, -ethacrylat, -crotonat, -maleinat, -fumarat oder -itaconat; oder Hydroxycycloalkylester wie 1,4-Bis(hydroxymethyl)cyclohexan-, Octahydro-4,7-methano-1H-indendimethanol- oder Methylpropandiolmonoacrylat, -monomethacrylat, -monoethacrylat, -monocrotonat, -monomaleinat, -monofumarat oder -monoitaconat; oder Umsetzungsprodukte aus cyclischen Estern, wie z.B. epsilon-Caprolacton und diesen Hydroxyalkyl- oder -cycloalkylestern; oder olefinisch ungesättigte Alkohole wie Allylalkohol oder Polyole wie Trimethylolpropanmono- oder diallylether oder Pentaerythritmono-, -dioder -triallylether (hinsichtlich dieser höherfunktionellen Monomeren (a2) gilt das für die höherfunktionellen Monomeren (a1) Gesagte sinngemäß); N,N-Dimethylaminoethylacrylat, N,N-Diethylaminoethylmethacrylat, Allylamin oder N-Methyliminoethylacrylat oder N,N-Di(methoxymethyl)aminoethylacrylat und -methacrylat oder N,N-Di(butoxymethyl)aminopropylacrylat und -methacrylat; Monomere dieser Art werden bevorzugt für die Herstellung von selbst vernetzenden Bestandteilen (A) verwendet.
B23) Monomere, welche mindestens eine Säuregruppe, die in die entsprechende Säureaniongruppe überführbar ist, pro Molekül tragen, wie Acrylsäure, Methacrylsäure, Ethacrylsäure, Crotonsäure, Maleinsäure, Fumarsäure oder Itaconsäure; olefinisch ungesättigte Sulfon- oder Phosphonsäuren oder deren Teilester; oder Maleinsäuremono(meth)acryloyloxyethylester, Bernsteinsäuremono(meth)acryloyloxyethylester oder Phthalsäuremono(meth)acryloyloxyethylester.
B24) Vinylester von in alpha-Stellung verzweigten Monocarbonsäuren mit 5 bis 18 Kohlenstoffatomen im Molekül. Die verzweigten Monocarbonsäuren können erhalten werden durch Umsetzung von Ameisensäure oder Kohlenmonoxid und Wasser mit Olefinen in Anwesenheit eines flüssigen, stark sauren Katalysators; die Olefine können Crack-Produkte von paraffinischen Kohlenwasserstoffen, wie Mineralölfraktionen, sein und können sowohl verzweigte wie geradkettige acyclische und/oder cycloaliphatische Olefine enthalten. Bei der Umsetzung solcher Olefine mit Ameisensäure bzw. mit Kohlenmonoxid und Wasser entsteht ein Gemisch aus Carbonsäuren, bei denen die Carboxylgruppen vorwiegend an einem quaternären Kohlenstoffatom sitzen. Andere olefinische Ausgangsstoffe sind z.B. Propylentrimer, Propylentetramer und Düsobutylen. Die Vinylester (a4) können aber auch auf an sich bekannte Weise aus den Säuren hergestellt werden, z.B. indem man die Säure mit Acetylen reagieren läßt. Besonders bevorzugt werden - wegen der guten Verfügbarkeit - Vinylester von gesättigten aliphatischen Monocarbonsäuren mit 9 bis 11 C-Atomen, die am alpha-C-Atom verzweigt sind, insbesondere aber Versatic®-Säuren, eingesetzt.
B25) Umsetzungsprodukte aus Acrylsäure und/oder Methacrylsäure mit dem Glycidylester einer in alpha-Stellung verzweigten Monocarbonsäure mit 5 bis 18 C-Atomen je Molekül, insbesondere einer Versatic®-Säure, oder anstelle des Umsetzungsproduktes eine äquivalenten Menge Acryl- und/oder Methacrylsäure, die dann während oder nach der Polymerisationsreaktion mit dem Glycidylester einer in alpha-Stellung verzweigten Monocarbonsäure mit 5 bis 18 C-Atomen je Molekül, insbesondere einer Versatic®-Säure, umgesetzt wird.
B26) Cyclische und/oder acyclische Olefine wie Ethylen, Propylen, But-1-en, Pent-1-en, Hex-1-en, Cyclohexen, Cyclopenten, Norbonen, Butadien, Isopren, Cylopentadien und/oder Dicyclopentadien.
B27) (Meth)Acrylsäureamide wie (Meth)Acrylsäureamid, N-Methyl-, N,N-Dimethyl-, N-Ethyl-, N,N-Diethyl-, N-Propyl-, N,N-Dipropyl-, N-Butyl-, N,N-Dibutyl-, N-Cyclohexyl-, N,N-Cyclohexyl-methyl- und/oder N-Methylol-, N,N-Dimethylol-, N-Methoxymethyl-, N,N-Di(methoxymethyl)-, N-Ethoxymethyl- und/oder N,N-Di(ethoxyethyl)-(meth)acrylsäureamid.
B28) Epoxidgruppen enthaltende Monomere wie der Glycidylester der Acrylsäure, Methacrylsäure, Ethacrylsäure, Crotonsäure, Maleinsäure, Fumarsäure und/oder Itaconsäure.
B29) Vinylaromatische Kohlenwasserstoffe wie Styrol, alpha-Alkylstyrole, insbesondere alpha-Methylstyrol, und/oder Vinyltoluol; Vinylbenzoesäure (alle Isomere), N,N-Diethylaminostyrol (alle Isomere), alpha-Methylvinylbenzoesäure (alle Isomere), N,N-Diethylamino-alphamethylstyrol (alle Isomere) und/oder p-Vinylbenzsolsulfonsäure.
B210) Nitrile wie Acrylnitril und/oder Methacrylnitril.
B211) Vinylverbindungen, insbesondere Vinyl- und/oder Vinylidendihalogenide wie Vinylchlorid, Vinylfluorid, Vinylidendichlorid oder Vinylidendifluorid; N-Vinylamide wie Vinyl-N-methylformamid, N-Vinylcaprolactam, 1-Vinylimidazol oder N-Vinylpyrrolidon; Vinylether wie Ethylvinylether, n-Propylvinylether, Isopropylvinylether, n-Butylvinylether, Isobutylvinylether und/oder Vinylcyclohexylether; und/oder Vinylester wie Vinylacetat, Vinylpropionat, Vinylbutyrat, Vinylpivalat und/oder der Vinylester der 2-Methyl-2-ethylheptansäure.
B212) Allylverbindungen, insbesondere Allylether und -ester wie Allylmethyl-, -ethyl-, -propyl- oder -butylether oder Allylacetat, -propionat oder -butyrat.
B213) Polysiloxanmakromonomere, die ein zahlenmittleres Molekulargewicht Mn von 1.000 bis 40.000 und im Mittel 0,5 bis 2,5 ethylenisch ungesättigte Doppelbindungen pro Molekül aufweisen; insbesondere Polysiloxanmakromonomere, die ein zahlenmittleres Molekulargewicht Mn von 2.000 bis 20.000, besonders bevorzugt 2.500 bis 10.000 und insbesondere 3.000 bis 7.000 und im Mittel 0,5 bis 2,5, bevorzugt 0,5 bis 1,5, ethylenisch ungesättigte Doppelbindungen pro Molekül aufweisen, wie sie in der DE-A-38 07 571 auf den Seiten 5 bis 7, der DE-A 37 06 095 in den Spalten 3 bis 7, der EP-B-0 358 153 auf den Seiten 3 bis 6, in der US-A 4,754,014 in den Spalten 5 bis 9, in der DE-A 44 21 823 oder in der internationalen Patentanmeldung WO 92/22615 auf Seite 12, Zeile 18, bis Seite 18, Zeile 10, beschrieben sind.
   und/oder
B214) Acryloxysilan-enthaltende Vinylmonomere, herstellbar durch Umsetzung hydroxyfunktioneller Silane mit Epichlorhydrin und anschließender Umsetzung des Reaktionsproduktes mit (Meth)acrylsäure und/oder Hydroxyalkyl- und/oder -cycloalkylestern der (Meth)Acrylsäure (vgl. Monomere B2).

Weitere Beispiele geeigneter Monomerer (B2) sind aus der europäischen Patentschrift EP-B-0 730 613 bekannt.

Vorzugsweise werden Gemische der Monomeren (B21), (B22) und (B23) angewandt. Die Zusammensetzung der Gemische kann sehr breit variieren. Im allgemeinen empfiehlt es sich die folgende Zusammensetzung zu wählen:
(B21): 50 bis 95 Gew.-%, bevorzugt 55 bis 90 Gew.-% und insbesondere 60 bis 85 Gew.-%;
(B22): 2 bis 30 Gew.-%, bevorzugt 3 bis 25 Gew.-% und insbesondere 4 bis 20 Gew.-% und
(B23): 2 bis 25 Gew.-%, bevorzugt 3 bis 20 Gew.-% und insbesondere 4 bis 15 Gew.-%.

Hierbei beziehen sich die Gew.-%-Angaben jeweils auf die Gesamtmenge des Gemischs von Monomeren (B2).

Die Monomere (B2) werden in Gegenwart mindestens eines radikalischen Initiators umgesetzt. Als Beispiele für einsetzbare Initiatoren werden genannt: Dialkylperoxide, wie Di-tert.-Butylperoxid oder Dicumylperoxid; Hydroperoxide, wie Cumolhydroperoxid oder tert.- Butylhydroperoxid; Perester, wie tert.-Butylperbenzoat, tert.-Butylperpivalat, tert.-Butylper-3,5,5-trimethylhexanoat oder tert.-Butylper-2-ethylhexanoat; Kalium-, Natrium- oder Ammoniumsperoxodisulfat; Azodinitrile wie Azobisisobutyronitril; C-C-spaltende Initiatoren wie Benzpinakolsilylether-, oder eine Kombination eines nicht oxidierenden Initiators mit Wasserstoffperoxid.

Erfindungsgemäß wird die Pfropfmischpolymerisation in einem wäßrigen Medium durchgeführt.

Das wäßrige Medium enthält im wesentlichen Wasser. Hierbei kann das wäßrige Medium in untergeordneten Mengen die nachstehend im Detail beschriebenen Vernetzungsmittel (C) sowie die nachstehend im Detail beschriebenen weiteren Bestandteile (F) bis (M) und/oder sonstige gelöste feste, flüssige oder gasförmige organische und/oder anorganische, nieder- und/oder hochmolekulare Stoffe, insbesondere oberflächenaktive Substanzen, enthalten, sofern diese nicht die Pfropfmischpolymerisation in negativer Weise beeinflussen oder gar hemmen. Im Rahmen der vorliegenden Erfindung ist unter dem Begriff "untergeordnete Menge" eine Menge zu verstehen, welche den wäßrigen Charakter des wäßrigen Mediums nicht aufhebt.

Bei dem wäßrigen Medium kann es sich aber auch um reines Wasser handeln.

Die Pfropfmischpolymerisation wird vorteilhafterweise bei Temperaturen oberhalb der Raumtemperatur und unterhalb der niedrigsten Zersetzungstemperatur der jeweils verwendeten Monomeren (B2) durchgeführt, wobei bevorzugt ein Temperaturbereich von 10 bis 150°C, ganz besonders bevorzugt 70 bis 120 °C und insbesondere 80 bis 110 °C gewählt wird.

Bei Verwendung besonders leicht flüchtiger Monomeren (B2) kann die Pfropfmischpolymerisation auch unter Druck, vorzugsweise unter 1,5 bis 3.000 bar, bevorzugt 5 bis 1.500 und insbesondere 10 bis 1.000 bar mit durchgeführt werden.

Die Monomeren (B2) werden nach Art und Menge so ausgewählt, daß die erfindungsgemäß zu verwendenden Polyurethanacrylate (B) der vorstehend beschriebenen Spezifikation resultieren. Der Fachmann kann daher, je nach angewandten Monomeren (B2), die entsprechende Menge aufgrund seines Fachwissens gegebenenfalls unter Zuhilfenahme einfacher Vorversuche leicht ermitteln. Vorzugsweise werden die Polyurethane (B1) und die Monomere (B2) in einem Mengenverhältnis von (B1) : (B2) = 10 . 1 bis 1 :10, bevorzugt 8 : 1 bis 1 : 8, besonders bevorzugt 5 : 1 bis 1 : 5 und insbesondere 2,5 : 1 bis 1 : 2,5 miteinander umgesetzt.

Die radikalische Pfropfmischpolymerisation weist methodisch keine Besonderheiten auf, sondern erfolgt nach den üblichen und bekannten Methoden, wie sie in den Patentschriften EP-A-0 521 928, EP-A-0 522 420, EP-A-0 522 419 oder EP-A-0 730 613 beschrieben werden. Vorzugsweise wird sie in den üblichen und bekannten Rührkesseln, Rührkesselkaskaden, Rohrreaktoren, Schlaufenreaktoren oder Taylorreaktoren, wie sie beispielsweise in den Patentschriften DE-B-1 071 241 oder EP-A-0 498 583 oder in dem Artikel von K. Kataoka in Chemical Engineering Science, Band 50, Heft 9, 1995, Seiten 1409 bis 1416, beschrieben werden, durchgeführt. Hierbei werden die Taylorreaktoren so ausgelegt, daß auf der gesamten Reaktorlänge die Bedingungen der Taylorströmung erfüllt sind, selbst wenn sich die kinematische Viskosität des Reaktionsmediums aufgrund der Pfropfmischpolymerisation stark ändert, insbesondere ansteigt.

Der weitere wesentliche Bestandteil des erfindungsgemäßen Beschichtungsstoffs ist mindestens ein Aminoplastharz (C). Das Aminoplastharz (C) ist als solches oder in der Gegenwart der Bestandteile (A) und (B) wasserlöslich oder -dispergierbar.

Beispiele geeigneter Aminoplastharze (C) sind Melaminharze, Guanaminharze, Glykolurilharze oder Harnstoffharze. Ergänzend wird auf Römpp Lexikon Lacke und Druckfarben, Georg Thieme Verlag, 1998, Seite 29, »Aminoharze«, und das Lehrbuch "Lackadditive" von Johan Bieleman, Wiley-VCH, Weinheim, New York, 1998, Seiten 242 ff., oder auf das Buch "Paints, Coatings and Solvents", second completely revised edition, Edit. D. Stoye und W. Freitag, Wiley-VCH, Weinheim, New York, 1998, Seiten 80 ff., verwiesen. Des weiteren kommen die üblichen und bekannten Aminoplastharze in Betracht, deren Methylol- und/oder Methoxymethylgruppen z. T. mittels Carbamat- oder Allophanatgruppen defunktionalisiert sind. Vernetzungsmittel dieser Art werden in den Patentschriften US-A-4 710 542 und EP-B-0 245 700 sowie in dem Artikel von B. Singh und Mitarbeiter "Carbamylmethylated Melamines, Novel Crosslinkers for the Coatings Industry" in Advanced Organic Coatings Science and Tecbnology Series, 1991, Band 13, Seiten 193 bis 207, beschrieben.

Besonders bevorzugt werden niedermolekulare Melaminharze (C) verwendet, welche mit Methanol, Ethanol, Propanol und/oder Butanol, insbesondere aber Methanol, verestert sind und im statistischen Mittel 0,05 bis 3, vorzugsweise 0,07 bis 2,5 und insbesondere 0,08 bis 2 Iminogruppen pro Molekül enthalten.

Noch ein weiterer wesentlicher Bestandteil des erfindungsgemäßen Beschichtungsstoffs ist mindestens ein farb- und/oder effektgebendes Pigment und/oder ein Füllstoff (D).

Als Effektpigmente (D) können Metallplättchenpigmente wie handelsübliche Aluminiumbronzen, gemäß DE-A-36 36 183 chromatierte Aluminiumbronzen, und handelsübliche Edelstahlbronzen sowie nichtmetallische Effektpigmente, wie zum Beispiel Perlglanz- bzw. Interferenzpigmente, eingesetzt werden. Ergänzend wird auf Römpp Lexikon Lacke und Druckfarben, Georg Thieme Verlag, 1998, Seiten 176, »Effektpigmente« und Seiten 380 und 381 »Metalloxid-Glimmer-Pigmente« bis »Metallpigmente«, verwiesen.

Beispiele für geeignete anorganische farbgebende Pigmente (D) sind Titandioxid, Eisenoxide, Sicotransgelb und Ruß. Beispiele für geeignete organische farbgebende Pigmente (D) sind Thioindigopigmente Indanthrenblau, Cromophthalrot, Irgazinorange und Heliogengrün. Ergänzend wird auf Römpp Lexikon Lacke und Druckfarben, Georg Thieme Verlag, 1998, Seiten 180 und 181, »Eisenblau-Pigmente« bis »Eisenoxidschwarz«, Seiten 451 bis 453 »Pigmente« bis »Pigmentsvolumenkonzentration«, Seite 563 »Thioindigo-Pigmente« und Seite 567 »Titandioxid-Pigmente« verwiesen.

Beispiele geeigneter Füllstoffe (D) sind organische und anorganische Füllstoffe (D) wie Kreide, Calciumsulfat, Bariumsulfat, Silikate wie Talk oder Kaolin, Kieselsäuren, Oxide wie Aluminiumhydroxid oder organische Füllstoffe wie Textilfasern, Cellulosefasern, Polyethylenfasem oder Holzmehl. Ergänzend wird auf Römpp Lexikon Lacke und Druckfarben, Georg Thieme Verlag, 1998, Seiten 250 ff., »Füllstoffe«, verwiesen.

Die Pigmente und/oder Füllstoffe (D) können direkt oder über Pigmentpasten in die erfindungsgemäßen Beschichtungsstoffe eingearbeitet werden, wobei als Reibharze insbesondere die vorstehend beschriebenen Bestandteile (A) und/oder (B) in Betracht kommen.

Die Zusammensetzung des erfindungsgemäßen Beschichtungsstoffs kann sehr breit variieren und kann daher allen Verwendungszwecken, für die der erfindungsgemäße Beschichtungsstoff in Betracht kommt, angepaßt werden, was ein weiterer besonderer Vorteil des erfindungsgemäßen Beschichtungsstoffs ist.

Weitere besondere Vorteile resultieren, wenn die Bestandteile (A), (B), (C) und (D) in dem erfindungsgemäßen Beschichtungsstoff in Mengen von
A) 2 bis 90, vorzugsweise 3 bis 80 und insbesondere 5 bis 70 Gew.-%,
B) 1 bis 80, vorzugsweise 3 bis 70 und insbesondere 4 bis 60 Gew.-%,
C) 1 bis 80, vorzugsweise 2 bis 70 und insbesondere 3 bis 60 Gew.-% und
D) 1 bis 95, vorzugsweise 2 bis 90 und insbesondere 3 bis 85 Gew.-%
angewandt werden, wobei die Gew.-% jeweils auf den Gesamtfeststoffgehalt des Beschichtungsstoffs bezogen sind und sich die Mengen der Bestandteile (A), (B), (C) und (D) stets zu 100 Gew.-% addieren.

Hierbei ist es des weiteren von Vorteil, wenn die Bestandteile (A), (B) und (C) in einem Mengenverhältnis, bezogen auf den Festkörper (nicht flüchtiger Anteil) dieser Bestandteile (100%), von (A) : (B) : (C) = 25 - 70 : 10 - 40 : 10 - 40, vorzugsweise 30 - 50 : 20 - 37 : 20 - 37 und insbesondere 40 - 50 : 20 - 35 : 20 - 30 angewandt werden. Vorzugsweise sind dann die Pigmente und/oder Füllstoffe (D) in dem erfindungsgemäßen Beschichtungsstoff in einer Pigmentvolumenkonzentration enthalten, die für die Deckfähigkeit einer 45µm starken Lackierung bei einmaligem Auftrag ausreicht.

Des weiteren kann der erfindungsgemäße Beschichtungsstoff noch mindestens ein Polyisocyanat (E) enthalten. Wird der erfindungsgemäße Beschichtungsstoff in der Form eines Zweikomponenten- oder Mehrkomponentensystems insbesondere als erfindungsgemäßer Original-Reparaturlack verwendet, ist das Polyisocyanat (E) obligatorischer Bestandteil.

Als Polyisocyanate (E) kommen grundsätzlich alle der üblichen und bekannten, auf dem Lackgebiet verwendeten aliphatischen, cycloaliphatischen, aliphatischcycloaliphatischen, aromatischen, aliphatisch-aromatischen und/oder cycloaliphatisch-aromatischen Polyisocyanate und Polyisocyanataddukte (E) in Betracht, welche auch als Lackpolyisocyanate bezeichnet werden. Vorteilhafterweise weisen diese Polyisocyanate (E) im statistischen Mittel eine Funktionalität von 2 bis 5, bevorzugt 2,5 bis 4,5 und insbesondere 2,8 bis 4,2 und Viskositäten von 100 bis 10.000, vorzugsweise 100 bis 5000 mPas auf. Außerdem können die Polyisocyanate (E) in üblicher und bekannter Weise hydrophil oder hydrophob modifiziert sein.

Beispiele geeigneter Polyisocyanataddukte (E) sind isocyanatgruppenhaltige Polyurethanpräpolymere, die durch Reaktion von Polyolen mit einem Überschuß an Polyisocyanaten (E) bzw. (b1) hergestellt werden können und bevorzugt niederviskos sind. Es können auch Isocyanurat-, Biuret-, Allophanat-, Iminooxadiazindion-, Urethan-, Harnstoff-, Carbodiimid und/oder Uretdiongruppen aufweisende Polyisocyanate verwendet werden. Urethangruppen aufweisende Polyisocyanate (E) werden beispielsweise durch Umsetzung eines Teils der Isocyanatgruppen mit Polyolen, wie z.B. Trimethylolpropan und. Glycerin, erhalten.

Ganz besonders bevorzugt werden Gemische aus Uretdion-und/oder Isocyanuratgruppen und/oder Allophanatgruppen aufweisenden Polyisocyanataddukten (E) auf Basis von Hexamethylendiisocyanat, wie sie durch katalytische Oligomerisierung von Hexamethylendiisocyanat unter Verwendung von geeigneten Katalysatoren entstehen, eingesetzt.

Der Gehalt des erfindungsgemäßen Beschichtungsstoffs an Polyisocyanaten (E) kann ebenfalls sehr breit variieren. Demgemäß kann der erfindungsgemäße Beschichtungsstoff in der Form eines Zweikomponenten- oder Mehrkomponentensystems sehr leicht den unterschiedlichsten Anforderungen, welche an solche Systeme üblicherweise gestellt werden, angepaßt werden, was noch ein weiterer besonderer Vorteil des erfindungsgemäßen Beschichtungsstoffs ist. Weitere besondere Vorteil resultieren, wenn die Polyisocyanate (E) in dem etfindungsgemäßen Beschichtungsstoff in einer Menge von 0,5 bis 50, vorzugsweise 1 bis 40 und insbesondere 2 bis 30 Gew.-%, jeweils bezogen auf den Gesamtfeststoffgehalt des erfindungsgemäßen Beschichtungsstoffs, enthalten sind.

Darüber hinaus kann der erfindungsgemäße Beschichtungsstoff noch weitere Bestandteile, wie sie auf dem hier in Rede stehenden technologischen Gebiet üblich und bekannt sind, in üblichen und bekannten, wirksamen Mengen enthalten. Wesentlich ist hierbei, daß die weiteren Bestandteile das vorteilhafte Eigenschaftsprofil des erfindungsgemäßen Beschichtungsstoffs nicht negativ beeinflussen, sondern in vorteilhafter Weise variieren.

Beispiele geeigneter weiterer Bestandteile sind Vernetzungsmittel (F), insbesondere Epoxidgruppen enthaltende Verbindungen oder Harze, Tris(alkoxycarbonylamino)triazine, Carbonatgruppen enthaltende Verbindungen oder Harze, blockierte Polyisocyanate, beta-Hydroxyalkylamide sowie Verbindungen mit im Mittel mindestens zwei zur Umesterung befähigten Gruppen, beispielsweise Umsetzungsprodukte von Malonsäurediestem und Polyisocyanaten oder von Estern und Teilestern mehrwertiger Alkohole der Malonsäure mit Monoisocyanaten, wie sie der europäischen Patentschrift EP-A-0 596 460 beschrieben werden.

Wenn der erfindungsgemäße Beschichtungsstoff nicht nur thermisch sondern auch mit aktinischer Strahlung, insbesondere UV-Strahlung und/oder Elektronenstrahlung, härtbar sein soll (Dual Cure), enthält er als weiteren Bestandteil mindestens einen Bestandteil (G), welcher mit aktinischer Strahlung härtbar ist. Als Bestandteile (G) kommen grundsätzlich alle mit aktinischer Strahlung, insbesondere UV-Strahlung und/oder Elektronenstrahlung, härtbaren oligomeren und polymeren Verbindungen in Betracht, wie sie üblicherweise auf dem Gebiet der UV-härtbaren oder mit Elektronenstrahlung härtbaren Beschichtungsstoffe verwendet werden. Vorteilhafterweise werden strahlenhärtbare Bindemittel als Bestandteile (G) verwendet. Beispiele geeigneter strahlenhärtbarer Bindemittel (G) sind (meth)acrylfunktionelle (Meth)Acrylcopolymere, Polyetheracrylate, Polyesteracrylate, ungesättigte Polyester, Epoxyacrylate, Urethanacrylate, Aminoacrylate, Melaminacrylate, Silikonacrylate, Isocyanatoacrylate und die entsprechenden Methacrylate. Des weiteren enthält der erfindungsgemäße Beschichtungsstoff in diesem Falle vorteilhafterweise als weiteren Bestandteil mindestens einen Photoinitiator (H), beispeilsweise vom Norrish II-Typ, dessen Wirkungsmechanismus auf einer intramolekularen Variante der Wasserstoff-Abstraktionsreaktionen beruht, wie sie in vielfältiger Weise bei photochemischen Reaktionen auftreten (beispielhaft sei hier auf Römpp Chemie Lexikon, 9. erweiterte und neubearbeitete Auflage, Georg Thieme Verlag Stuttgart, Bd. 4, 1991, verwiesen), oder kationische Photoinitiatoren (beispielhaft sei hier auf Römpp Lexikon »Lacke und Druckfarben« Georg Thieme Verlag Stuttgart, 1998, Seiten 444 bis 446, verwiesen), insbesondere aber Benzophenone, Benzoine oder Benzoinether oder Phosphinoxide.

Weitere Beispiele geeigneter weiterer Bestandteile sind Reaktivverdünner (J) für die thermische Vernetzung sowie gegebenenfalls für die Vernetzung mit aktinischer Strahlung wie verzweigte, cyclische und/oder acyclische C₉-C₁₆-Alkane, die mit mindestens zwei Hydroxylgruppen funktionalisiert sind, vorzugsweise Dialkyloctandiole, insbesondere die stellungsisomeren Diethyloctandiole; oligomere Polyole, welche aus oligomeren Zwischenprodukten, die durch Metathesereaktionen von acyclischen Monoolefinen und cyclischen Monoolefinen gewonnen werden, durch deren Hydroformylierung und anschließender Hydrierung erhältlich sind; hyperverzweigte Verbindungen mit einer tetrafunktionellen Zentralgruppe, wie sie in den Patentschriften WO 93/17060 oder WO 96/12754 oder in dem Buch von G. R. Newkome, C. N. Moorefield und F. Vögtle, "Dendritic Molecules, Concepts, Syntheses, Perspectives", VCH, Weinheim, New York, 1996, beschrieben werden; Polycarbonatdiole; Polyesterpolyole; Poly(meth)acrylatdiole; oder isocyanatreaktive Lösemittel wie Butylglykol, 2-Methoxypropanol, n-Butanol, Methoxybutanol, n-Propanol, Ethylenglykolmonomethylether, Ethylenglykolmonoethylether, Ethylenglykolmonobutylether, Diethylenglykolmonomethylether, Diethylenglykolmonoethyl-ether, Diethylenglykoldiethylether, Diethylenglykolmonobutylether, Trimethylolpropan, 2-Hydroxypropionsäureethylester oder 3-Methyl-3-methoxybutanol sowie Derivate auf Basis von Propylenglykol, z.B. Isopropoxypropanol; Polysiloxanmakromonomere, (Meth)Acrylsäure und deren mono-, di- und höherfunktionellen Ester; Maleinsäure und deren Ester bzw. Halbester; mono-, diund höherfunktionelle Vinylester; mono-, di- und höherfunktionelle Vinylether; sowie mono-, di- und höherfunktionelle Vinylharnstoffe.

Weitere Beispiele geeigneter weiterer Bestandteile sind Initiatoren der thermischen Vernetzung (K), die ab 80 bis 120°C Radikale bilden wie organische Peroxide, organische Azoverbindungen oder C-C-spaltende Initiatoren wie Dialkylperoxide, Peroxocarbonsäuren, Peroxodicarbonate, Peroxidester, Hydroperoxide, Ketonperoxide, Azodinitrile oder Benzpinakolsilylether. C-C-spaltende Initiatoren sind besonders bevorzugt, da bei ihrer thermischen Spaltung keine gasförmigen Zersetzungprodukte gebildet werden, die zu Störungen in der Lackschicht führen könnten.

Weitere Beispiele geeigneter weiterer Bestandteile sind Lackadditive (L), welche unter den Verarbeitungs- und Applikationsbedingungen des erfindungsgemäßen Beschichtungsstoffs vorzugsweise nicht flüchtig sind. Beispiele geeigneter Lackdditive (L) sind
- UV-Absorber;
- Radikalfänger;
- Katalysatoren für die Isocyanatvernetzung wie Dibutylzinndilaurat oder Lithiumdecanoat;
- Slipadditive;
- Polymerisationsinhibitoren;
- Entschäumer;
- Hautverhinderungsmittel;
- Emulgatoren, insbesondere nicht ionische Emulgatoren wie alkoxylierte Alkanole und Polyole, Phenole und Alkylphenole oder anionische Emulgatoren wie Alkalisalze oder Ammoniumsalze von Alkancarbonsäuren, Alkansulfonsäuren, und Sulfosäuren von alkoxylierten Alkanolen und Polyolen, Phenolen und Alkylphenolen;
- Netzmittel wie Siloxane, fluorhaltige Verbindungen, Carbonsäurehalbester, Phosphorsäureester, Polyacrylsäuren und deren Copolymere oder Polyurethane;
- Haftvermittler;
- Verlaufmittel;
- filmbildende Hilfsmittel wie Cellulose-Derivate;
- rheologiesteuernde Additive wie die aus den Patentschriften WO 94/22968, EP-A-0 276 501, EP-A-0 249 201 oder WO 97/12945 bekannten; vernetzte polymere Mikroteilchen, wie sie beispielsweise in der EP-A-0 008 127 offenbart sind; anorganische Schichtsilikate wie Aluminium-Magnesium-Silikate, Natrium-Magnesium- und Natrium-Magnesium-Fluor-Lithium-Schichtsilikate des Montmorillonit-Typs; Kieselsäuren wie Aerosile; oder synthetische Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäureanhydrid- oder Ethylen-Maleinsäureanhydrid-Copolymere und ihre Derivate oder hydrophob modifizierte ethoxylierte Urethane oder Polyacrylate;
- Flammschutzmittel und/oder
- Biozide.

Weitere Beispiele geeigneter Lackadditive (L) werden in dem Lehrbuch »Lackadditive« von Johan Bieleman, Wiley-VCH, Weinheim, New York, 1998, beschrieben.

Nicht zuletzt kann der erfindungsgemäße Beschichtungsstoff als weiteren Bestandteil mindestens ein gegebenenfalls wassermischbares organisches Lösemittel (M) enthalten wie z.B. aliphatische, aromatische und/oder cycloaliphatische Kohlenwasserstoffe wie Toluol oder Methylcylohexan oder Decalin, Alkylester und Alkoxyalkylester der Essigsäure oder Propionsäure wie 2-Methoxypropylacetat-1, Alkanole wie Ethanol, Ketone wie Methylisobutylketon, Glykolether Glykoletherester, Amide wie N-Methylpyrrolidon und/oder Ether wie Tetrahydrofuran.

Die Herstellung des erfindungsgemäßen Beschichtungsstoffs aus seinen Bestandteilen (A), (B), (C) und (D) sowie gegebenenfalls mindestens einem weiteren Bestandteil (F), (G), (H), (J), (L) und/oder (M) nach dem ersten erfindungsgemäßen Verfahren oder (A), (B), (C), (D) sowie mindestens einem der genannten weiteren Bestandteile einerseits sowie (E) andererseits nach dem zweiten erfindungsgemäßen Verfahren weist methodisch keine Besonderheiten auf, sondern erfolgt in üblicher und bekannter Weise durch Vermischen der Bestandteile in geeigneten Mischaggregaten wie Rührkessel, Dissolver, Extruder oder Mischdüsen nach den für die Herstellung der jeweiligen erfindungsgemäßen Beschichtungsstoffe geeigneten Verfahren.

Der erfindungsgemäße Beschichtungsstoff dient der Herstellung der erfindungsgemäßen Unidecklackierung, inklusive der erfindungsgemäßen Original-Reparaturlackierung, oder der erfindungsgemäßen Basislackierung im Rahmen der erfindungsgemäßen mehrschichtigen farb- und/oder effektgebenden Lackierung, insbesondere Zweischichtlackierung, auf grundierten oder ungrundierten Substraten.

Als Substrate kommen im Grunde alle zu lackierenden Oberflächen, die durch eine Härtung der hierauf befindlichen Lackierungen unter Anwendung von Hitze und gegebenenfalls aktinischer Strahlung nicht geschädigt werden, in Betracht, das sind z. B. Metalle, Kunststoffe, Holz, Keramik, Stein, Textil, Faserverbunde, Leder, Glas, Glasfasern, Glas- und Steinwolle, mineral- und harzgebundene Baustoffe, wie Gips- und Zementplatten oder Dachziegel, sowie Verbunde dieser Materialien.

Demnach ist der erfindungsgemäße Beschichtungsstoff im Grunde auch für Anwendungen außerhalb der Automobillackierung geeignet, beispielsweise in der industriellen Lackierung, inklusive Coil Coating und Container Coating. Im Rahmen der industriellen Lackierungen eignet er sich für die Lackierung praktisch aller Teile und Gegenstände für den privaten oder industriellen Gebrauch wie Radiatoren, Haushaltsgeräte, Kleinteile aus Metall, Radkappen oder Felgen. Darüber hinaus kommt der erfindungsgemäße Beschichtungsstoff auch für die Lackierung von Möbeln in Betracht.

Im Falle elektrisch leitfähiger Substrate können Grundierungen verwendet werden, die in üblicher und bekannter Weise aus Elektrotauchlacken (ETL) hergestellt werden. Hierfür kommen sowohl anodische (ATL) als auch kathodische (KTL) Elektrotauchlacke, insbesondere aber KTL, in Betracht.

Mit dem erfindungsgemäßen Beschichtungsstoff können insbesondere auch grundierte oder nicht grundierte Kunststoffe wie z. B. ABS, AMMA, ASA, CA, CAB, EP, UF, CF, MF, MPF, PF, PAN, PA, PE, HDPE, LDPE, LLDPE, UHMWPE, PET, PMMA, PP, PS, SB, PUR, PVC, RF, SAN, PBT, PPE, POM, PUR-RIM, SMC, BMC, PP-EPDM und UP (Kurzbezeichnungen nach DIN 7728T1) lackiert werden. Die zu lackierenden Kunststoffe können selbstverständlich auch Polymerblends, modifizierte Kunststoffe oder faserverstärkte Kunststoffe sein. Es können auch die üblicherweise im Fahrzeugbau, insbesondere Kraftfahrzeugbau, eingesetzten Kunststoffe zum Einsatz kommen.

Im Falle von nichtfunktionalisierten und/oder unpolaren Substratoberflächen können diese vor der Beschichtung in bekannter Weise einer Vorbehandlung, wie mit einem Plasma oder mit Beflammen, unterzogen oder mit einer Hydrogrundierung versehen werden.

Die Applikation des erfindungsgemäßen Beschichtungsstoffs weist keine methodischen Besonderheiten auf, sondern kann durch alle üblichen Applikationsmethoden, wie z.B. Spritzen, Rakeln, Streichen, Gießen, Tauchen oder Walzen erfolgen. Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air-Heißspritzen. Die Applikation kann bei Temperaturen von max. 70 bis 80°C durchgeführt werden, so daß geeignete Applikationsviskositäten erreicht werden, ohne daß bei der kurzzeitig einwirkenden thermischen Belastung eine Veränderung oder Schädigungen des Beschichtungsstoffs und seines gegebenenfalls wiederaufzubereitenden Overspray eintreten. So kann das Heißspritzen so ausgestaltet sein, daß der erfindungsgemäße Beschichtungsstoff nur sehr kurz in der oder kurz vor der Spritzdüse erhitzt wird.

Die für die Applikation verwendete Spritzkabine kann beispielsweise mit einem gegebenenfalls temperierbaren Umlauf betrieben werden, der mit einem geeigneten Absorptionsmedium für den Overspray, z. B. dem Beschichtungsstoff selbst, betrieben wird.

Sofern der erfindungsgemäße Beschichtungsstoff weitere Bestandteile (G) enthält, die mit aktinischer Strahlung vernetztbar sind, wird die Applikation bei Beleuchtung mit sichtbarem Licht einer Wellenlänge von über 550 nm oder unter Lichtausschluß durchgeführt. Hierdurch werden eine stoffliche Änderung oder Schädigung des Beschichtungsstoffs und des Overspray vermieden.

Die vorstehend beschriebenen Applikationsmethoden können im Rahmen der Herstellung der erfindungsgemäßen mehrschichtigen Lackierungen zur Herstellung aller Schichten der Lackierung angewandt werden.

Erfindungsgemäß kann die erfindungsgemäße Unidecklackschicht oder Wasserbasislackschicht je nach ihrer stofflichen Zusammensetzung thermisch und/oder mit aktinischer Strahlung ausgehärtet werden.

Die Aushärtung kann nach einer gewissen Ruhezeit erfolgen. Sie kann eine Dauer von 30 s bis 2 h, vorzugsweise 1 min bis 1 h und insbesondere 3 min bis 10 min haben. Die Ruhezeit dient beispielsweise zum Verlauf und zur Entgasung der Lackschichten oder zum Verdunsten von flüchtigen Bestandteilen wie Lösemittel oder Wasser. Die Ruhezeit kann durch die Anwendung erhöhter Temperaturen bis 80 °C unterstützt und/oder verkürzt werden, sofern hierbei keine Schädigungen oder Veränderungen der Lackschichten eintreten, etwa eine vorzeitige vollständige Vernetzung.

Die thermische Härtung weist keine methodischen Besonderheiten auf, sondern erfolgt nach den üblichen und bekannten Methoden wie Erhitzen in einem Umluftofen oder Bestrahlen mit IR-Lampen. Hierbei kann die thermische Härtung auch stufenweise erfolgen. Vorteilhafterweise erfolgt die thermische Härtung im Falle der erfindungsgemäßen Original-Reparaturlackierung bei einer Temperatur von 50 bis 100°C, besonders bevorzugt 80 bis 100°C und insbesondere 90 bis 100°C während einer Zeit von 1 min bis zu 2 h, besonders bevorzugt 2 min bis zu 1 h und insbesondere 3 min bis 30 min. Werden Substrate verwendet, welche thermisch stark belastbar sind, kann die thermische Vernetzung auch bei Temperaturen oberhalb 100°C durchgeführt werden. Im allgemeinen empfiehlt es sich, hierbei Temperaturen von 120 bis 160°C, vorzugsweise 125 bis 145°C und insbesondere 130 bis 145°C (Objekttemperatur) während einer Zeit von 1 min bis zu 2 h, besonders bevorzugt 2 min bis zu 1 h und insbesondere 3 min bis 30 min anzuwenden.

Die thermische Härtung kann bei entsprechender stofflicher Zusammensetzung des erfindungsgemäßen Beschichtungsstoffs durch die Härtung mit aktinischer Strahlung ergänzt werden, wobei UV-Strahlung und/oder Elektronenstrahlen verwendet werden können. Gegebenenfalls kann sie mit aktinischer Strahlung von anderen Strahlenquellen durchgeführt oder ergänzt werden. Im Falle von Elektronenstrahlen wird vorzugsweise unter Inertgasatmosphäre gearbeitet. Dies kann beispielsweise durch Zuführen von Kohlendioxid und/oder Stickstoff direkt an die Oberfläche der Lackschicht gewährleistet werden.

Auch im Falle der Härtung mit UV-Strahlung kann, um die Inhibierung der Reaktion und die Bildung von Ozon zu vermeiden, unter Inertgas gearbeitet werden.

Für die Härtung mit aktinischer Strahlung werden die üblichen und bekannten Strahlenquellen und optischen Hilfsmaßnahmen angewandt. Beispiele geeigneter Strahlenquellen sind Quecksilberhoch- oder -niederdruckdampflampen, welche gegebenenfalls mit Blei dotiert sind, um ein Strahlenfenster bis zu 405 nm zu öffnen, oder Elektronenstrahlquellen. Deren Anordnung ist im Prinzip bekannt und kann den Gegebenheiten des Werkstücks und der Verfahrensparameter angepaßt werden. Bei kompliziert geformten Werkstücken wie Automobilkarosserien können die nicht direkter Strahlung zugänglichen Bereiche (Schattenbereiche) wie Hohlräume, Falzen und andere konstruktionsbedingte Hinterschneidungen mit Punkt-, Kleinflächen- oder Rundumstrahlern verbunden mit einer automatischen Bewegungseinrichtung für das Bestrahlen von Hohlräumen oder Kanten ausgehärtet werden.

Die Anlagen und Bedingungen dieser Härtungsmethoden werden beispielsweise in R. Holmes, U.V. and E.B. Curing Formulations for Printing Inks, Coatings and Paints, SITA Technology, Academic Press, London, United Kindom 1984, beschrieben.

Hierbei kann die Aushärtung stufenweise erfolgen, d. h. durch mehrfache Belichtung oder Bestrahlung mit aktinischer Strahlung. Dies kann auch alternierend erfolgen, d. h., daß abwechselnd mit UV-Strahlung und Elektronenstrahlung gehärtet wird.

Werden die thermische Härtung und Härtung mit aktinischer Strahlung zusammen angewandt (Dual Cure), können diese Methoden gleichzeitig oder alternierend eingesetzt werden. Werden die beiden Härtungsmethoden alternierend verwendet, kann beispielsweise mit der thermischen Härtung begonnen und mit der Härtung mit aktinischer Strahlung geendet werden. In anderen Fällen kann es sich als vorteilhaft erweisen, mit der Härtung mit aktinischer Strahlung zu beginnen und hiermit zu enden. Der Fachmann kann die Härtungsmethode, welche für jeden Einzelfall besonders gut geeignet ist, aufgrund seines allgemeinen Fachwissens gegebenenfalls unter Zuhilfenahme einfacher Vorversuche ermitteln.

Insbesondere die Kombination von thermischer Härtung und Härtung mit aktinischer Strahlung (Dual Cure) bietet auch bei den erfindungsgemäßen Beschichtungsstoffen mit sehr hohem Pigmentgehalt noch Vorteile, die insbesondere darin liegen, daß die Unidecklackschichten und Original-Reparaturlackschichten oder die Basislackschichten in ihren substratnahen Bereichen in der Hauptsache thermisch und in ihren Oberflächenbereichen zusätzlich durch Strahlung gehärtet werden, was zu Lackierungen von einer besonders hohen Oberflächenqualität führt.

Diese Härtungsmethoden können im Rahmen der Herstellung der erfindungsgemäßen mehrschichtigen Lackierungen zur Herstellung aller Schichten der Lackierung angewandt werden.

Bei seiner Verwendung als erfindungsgemäßer Unidecklack wird der erfindungsgemäße Beschichtungsstoff vorteilhafterweise auf mit Füllerschichten oder Steinschlagschutzgrundierungen versehene Substrate appliziert und ausgehärtet.

Beispiele geeigneter Beschichtungsstoffe, die der Herstellung von Füllerschichten dienen, enthalten als Bindemittel beispielsweise in Wasser lösliche oder dispergierbare Polyester und/oder Polyurethane. Wäßrige Beschichtungsstoffe diese Art sind aus den Patentschriften DE-A-43 37 961, DE-A-44 38 504, DE-C-41 42 816 oder EP-A-0427 028 bekannt.

Bei seiner Verwendung als erfindungsgemäßer Wasserbasislack wird der erfindungsgemäße Beschichtungsstoff vorzugsweise auf die vorstehend beschriebenen Füllerschichten oder Steinschlagschutzgrundierungen appliziert, vorgetrocknet und mit mindestens einem Klarlack überschichtet, wonach die Wasserbasislackschicht und die Klarlackschicht oder die Klarlackschichten gemeinsam ausgehärtet werden (Naß-in-naß-Verfahren), wodurch die erfindungsgemäße farb- und/oder effektgebende Mehrschichtlackierung, insbesondere Zweischichtlackierung, resultiert.

Als Klarlacke zur Herstellung der Klarlackierung kommen alle üblichen und bekannten Einkomponenten-, Zweikomponenten- oder Mehrkomponenten-Klarlacke, Pulverklarlacke, Pulverslurry-Klarlacke oder UV-härtbaren Klarlacke in Betracht.

Beispiele geeigneter bekannter Einkomponenten-, Zweikomponenten- oder Mehrkomponenten-Klarlacke sind aus den Patentschriften DE-A-42 04 518, US-A-5,474,811, US-A-5,356,669, US-A-5,605,965, WO 94/10211, WO 94/10212, WO 94/10213, EP-A-0 594 068, EP-A-0 594 071, EP-A-0 594 142, EP-A-0 604 992, WO 94/22969, EP-A-0 596 460 oder WO 92/22615 bekannt.

Einkomponenten(1K)-Klarlacke enthalten bekanntermaßen hydroxylgruppenhaltige Bindemittel und Vernetzungsmittel wie blockierte Polyisocyanate, Tris(alkoxycarbonylamino)triazine und/oder Aminoplastharze. In einer weiteren Variante enthalten sie als Bindemittel Polymere mit seitenständigen Carbamat- und/oder Allophanatgruppen und carbamat- und/oder allophanatmodifizerte Aminoplastharze als Vernetzungsmittel (vgl. US-A-5,474,811, US-A-5,356,669, US-A-5,605,965, WO 94/10211, WO 94/10212, WO 94/10213, EP-A-0 594 068, EP-A-0 594 071 oder EP-A-0 594 142).

Zweikomponenten(2K)- oder Mehrkomponenten(3K, 4K)-Klarlacke enthalten als wesentliche Bestandteile bekanntermaßen hydroxylgruppenhaltige Bindemittel und Polyisocyanate als Vernetzungsmittel, welche bis zu ihrer Verwendung getrennt gelagert werden.

Beispiele geeigneter Pulverklarlacke sind beispielsweise aus der deutschen Patentschrift DE-A-42 22 194 oder der Produkt-Information der Firma BASF Lacke + Farben AG, "Pulverlacke", 1990 bekannt.

Pulverklarlacke enthalten als wesentliche Bestandteile vorzugsweise epoxidgruppenhaltige Bindemittel und Polycarbonsäuren als Vernetzungsmittel.

Beispiele geeigneter Pulverslurry-Klarlacke sind beispielsweise aus der US-Patentschrift US-A-4,268,542 und den deutschen Patentanmeldungen DE-A-195 18 392.4 und DE-A-196 13 547 bekannt oder werden in der nicht vorveröffentlichten deutschen Patentanmeldung DE-A-198 14 471.7 beschrieben.

Pulverslurry-Klarlacke enthalten bekanntermaßen Pulverklarlacke in einem wäßrigen Medium dispergiert.

UV-härtbare Klarlacke gehen beispielsweise aus den Patentschriften EP-A-0 540 884, EP-A- 0 568 967 oder US-A-4,675,234 hervor.

Von diesen werden die Zweikomponenten-Klarlacke besonders bevorzugt verwendet.

Die erfindungsgemäßen Unidecklackierungen weisen je nach Farbton Schichtdicken von 15 bis 60, vorzugsweise 18 bis 55, besonders bevorzugt 20 bis 50 und mit insbesondere 25 bis 45µm auf.

Die erfindungsgemäßen Basislackierungen weisen eine Schichtdicke von 5 bis 50, vorzugsweise 10 bis 40, besonders bevorzugt 12 bis 30 und insbesondere 15 bis 25 µm auf.

Der erfindungsgemäße Beschichtungsstoff, insbesondere der erfindungsgemäße Unidecklack, ist hervorragend für die emissionsarme Lackierung größerer Objekte wie Nutzfahrzeugkarosserien, bei denen die Zweischichtlackierung nach dem Naß-in-naß-Verfahren große Probleme bereitet, geeignet. Er liefert Unidecklackierungen, die sich durch guten Verlauf, Glanz, Decklackstand, Härte und praxisgerechte Lösemittel- und Chemikalienbeständigkeit auszeichnen. Der erfindungsgemäße Beschichtungsstoff, insbesondere der erfindungsgemäße Unidecklack, bildet eine hervorragende stoffliche Grundlage für den erfindungsgemäßen Original-Reparaturlack. Dieser eignet sich ausgezeichnet für die Reparaturlackierung von Nutzfahrzeugen in der Linie, wobei die Anpassung des Farbtons an den Farbton der Serienlackierung in besonders einfacher Weise bewerkstelligt werden kann. Die erfindungsgemäße Reparaturlackierung haftet ausgesprochen gut auf der Serienlackierung und weist dieselben vorteilhaften Eigenschaften wie diese auf. Als ein besonderer Vorteile erweist sich, daß der erfindungsgemäße Beschichtungsstoff auch als Wasserbasislack verwendet werden kann. In dieser Funktion liefert er Wasserbasislackschichten, die nach einer Vortrocknung sehr gut mit festkörperreichen Zweikomponentenklarlacken überschichtet werden können, wonach die Wasserbasislackschicht und die Klarlackschicht gemeinsam eingebrannt werden können. Die resultierende Zweischichtlackierung weist eine hervorragende Zwischenschichthaftung auf. In dieser Weise ist es möglich, Stellen an Nutzfahrzeugkarosserien, die eines besonderen Schutzes bedürfen, ganz gezielt mit einer Zweischichtlackierung auszurüsten. Solche Stellen befinden sich insbesondere an den Außenflächen der Nutzfahrzeugkarosserien, wo sie in hohem Maße der Beanspruchung durch Steinschlag und/oder durch Bürsten von Waschanlagen ausgesetzt sind. Die Zweischichtlackierung weist keine Haftungsprobleme im Übergangsbereich zur Unidecklackierung auf, und ihr Farbton kann bei Bedarf. in besonders einfacher Weise an den Farbton der Unidecklackierung angepaßt werden: Als weiterer besonderer Vorteil erweist sich, daß die Zweischichtlackierung auch noch gezielt zu dekorativen Zwecken, beispielsweise durch eine besondere Ausrüstung mit Effektpigmenten, verwendet werden kann, wobei ihre sonstigen Vorteile in vollem Umfang erhalten bleiben.

### Beispiele

### Herstellbeispiel 1

### Die Herstellung des Polyurethanacrytats (B)

In einem Reaktionsgefäß mit Rührer, Rückflußkühler und zwei Zulaufgefäßen wurden zu einer Mischung aus 77,6 Gewichtsteilen eines Polyesterpolyols mit einem zahlenmittleren Molekulargewicht von 630 auf Basis von Adipinsäure, Hexandiol-1,6 und Neopentylglykol, 9,3 Gewichtsteilen Neopentylglykol, 3,0 Gewichtsteilen Trimethylolpropanmonoallylether, 0,1 Gewichtsteilen Dibutylzinndilaurat und 110,2 Gewichtsteilen Methylisobutylketon 63,5 Gewichtsteile Isophorondiisocyanat hinzugegeben. Das Reaktionsgemisch wurde anschließend auf 105°C erhitzt. Bei einem Isocyanat-Gehalt von 1,8 Gew.-% wurden 15,1 Gewichtsteile Trimethylolpropan zu dem Reaktionsgemisch hinzugegeben, und die Reaktion wurde so lange weitergeführt, bis keine freien Isocyanatgruppen mehr nachgewiesen werden konnten.

Bei einer Temperatur von 105°C wurde zu dem resultierenden Polyurethan ein Gemisch aus 69,6 Gewichtsteilen n-Butylacrylat, 69,6 Gewichtsteile Methylmethacrylat, 16,6 Gewichtsteilen 2-Hydroxypropylmethacrylat und 13 Gewichtsteilen Acrylsäure innerhalb von drei Stunden zudosiert. Gleichzeitig wurden 5,1 Gewichtsteile tert.-Butylperethylhexanoat, gelöst in 42,8 Gewichtsteilen Methylisobutylketon, innerhalb von 3,5 Stunden zudosiert. Das Reaktionsgemisch wurde während 2,5 Stunden auf 105°C erhitzt und anschließend auf 90 °C abgekühlt. Anschließend wurden 10,6 Gewichtsteile Dimethylethanolamin und 483,2 Gewichtsteile deionisiertes Wasser hinzugegeben. Nach den Entfernen des Methylisobutylketons im Vakuum erhält man eine stabile 43 %ige Dispersion des Polyurethanacrylats (B) mit einem pH-Wert 7,9.

### Herstellbeispiel 2

### Die Herstellung des Polyesters (A)

In ein Reaktionsgefäß aus Edestahl einem Volumen von 41, ausgestattet mit einer regelbaren Ölumlautheizung, einem wandgängigen Rührer, einer Füllkörperkolonne, einem Wasserabscheider und einem Rückflußkühler mit einem Rücklauf auf den Kolonnenkopf sowie mit einer Temperaturmessung für das Reaktionsgemisch und den Kolonnenkopf wurden die folgenden Ausgangsprodukte eingewogen: 457 Gewichtsteile Hexahydrophthalsäure, 518 Gewichtsteile einer handelsüblichen Dimerfettsäure mit einer mittleren Molmasse von 527 und einer mittleren Funktionalität von 2,03, 398 Gewichtsteile Trimethylolpropan, 605 Gewichtsteile Hydroxypivalinsäureneopentylglykolester, 339 Gewichtsteile Neopentylglykol und 30 Gewichtsteile Cyclohexan als Schleppmittel. Die Ausgangsprodukte wurden geschmolzen und auf 155 °C erhitzt. Die resultierende Schmelze wurde unter Rühren während sechs Stunden auf 220 °C erhitzt. Die Steigerung der Temperatur wurde so durchgeführt, daß die Kolonnenkopftemperatur 85 °C nicht überstieg. Das resultierende Reaktionsprodukt wurde so lange bei 220 °C gehalten, bis eine Säurezahlen von 10,5 mg KOH/g erreicht war. Hiernach wurde es auf 150 °C abgekühlt, wonach 398 Gewichtsteile Trimellithsäureanhydrid zugesetzt wurden. Das resultierende Reaktionsgemisch wurde wieder auf 175 °C aufgeheizt und bei dieser Temperatur gehalten, bis eine Säurezahl von 33,2 und eine Viskosität von 235 mPas (gemessen an einer 50 %igen Lösung des Reaktionsgemischs in Ethylenglykolmono-n-butylether in einem ICI-Platte-Kegel-Viskosimeter, Kegel C, bei 23 °C) erreicht waren. Hiernach wurde sofort auf 130 °C abgekühlt und mit 900 Gewichtsteilen Ethylenglykolmono-n-butylether gelöst.

Die resultierende Lösung wurde auf unter 100 °C abgekühlt und mit 105 Gewichtsteilen Dimethylethanolamin versetzt. Die neutralisierte Lösung wurde in 1.000 Gewichtsteilen deionisiertem Wasser dispergiert und dann mit weiterem deionisiertem Wasser auf einen Festkörpergehalt (eine Stunde; 130 °C) von 55 Gew.-% eingestellt. Die resultierende wäßrige Dispersion des Polyesters (A) war schwach opak und wies einen pH-Wert von 7,55 auf. Der Polyester (A) hatte eine Säurezahl von 33,2 mg KOH/g, eine Hydroxylzahl von 159 mg KOH/g, eine zahlenmittlere Molmasse von 1.250 und einen Verzweigungsgrad von 1,78 mol/kg.

### Herstellbeispiel 3

### Die Herstellung einer Weißpigmente enthaltenden Pigmentpaste

In einem Labor-Dissolver wurden 450 Gewichtsteile der Dispersion des Polyurethanacrylats (B) des Herstellbeispiels 1 eingewogen. Unter Rühren (4m/s) wurden hierzu in der genannten Reihenfolge 20 Gewichtsteile Isopropoxypropanol, 10 Gewichtsteile eines handelsüblichen, nichtionischen, spezielle Ankergruppen enthaltenden Polyurethans als Pigmentdispergierhilfsmittel, 20 Gewichtsteile deionisiertes Wasser und 500 Gewichtsteile eines handelsüblichen Titandioxidpigments vom Rutiltyp mit geeigneter Oberflächenbehandlung zugesetzt. Die resultierende Mischung wurde dann während fünf Minuten mit einer Geschwindigkeit von 20 m/s dissolvert. Anschließend wurde die Mischung auf einer üblichen kontinuierlich arbeitenden Laborrührwerksmühle, die SAZ-Perlen als Mahlkörper mit einem Durchmesser von 1,0 bis 1,6 mm enthielt (Füllgrad von 75%), bei einer Rotorgeschwindigkeit von 7,5 m/s gemahlen. Hierbei wurde eine spezifische Energie von 75 Wh/kg eingetragen. Die Temperatur wurde während des Mahlvorgangs auf unter 40°C gehalten. Es resultierte eine wäßrige Pigmentpaste mit einer Verteilung des Pigments, wie sie zur Herstellung hochglänzender Unidecklackierungen notwendig ist.

### Beispiel 1

### Die Herstellung eines erfindungsgemäßen weißen Unidecklacks

In ein Rührgefäß aus Edelstahl wurden die nachfolgenden Bestandteile in der genannten Reihenfolge eingewogen und nach jeder Zugabe durch Rühren homogenisiert: 209 Gewichtsteile des Polyesters (A) des Herstellbeispiels 2, 18 Gewichtsteile N-Methylpyrrolidon, 27 Gewichtsteile eines aliphatischen Kohlenwasserstoffgemischs mit einem Siedebereich von 180 bis 210 °C, 5 Gewichtsteile Dimethylethanolamin, 92 Gewichtsteile eines Iminogruppen enthaltenden, mit Methanol veretherten, niedermolekularen Melaminharzes, 5 Gewichtsteile 2-Methylpropanol-1, 437 Gewichtsteile der Pigmentpaste gemäß dem Herstellbeispiel 3,13 Gewichtsteile eines handelsüblichen Acrylatverdickers (25 %ig in deionisiertem Wasser) und 185 Gewichtsteile deionisiertes Wasser. Es resultierte ein weißer Unidecklack mit einem Gehalt an nichtflüchtigen Bestandteilen von 50 Gew.-% und einer Viskosität von 1.500 mPas bei einem Schergefälle von 500 s⁻¹ in einem Rotationsviskosimeter.

### Beispiel 2

### Die Herstellung eines erfindungsgemäßen Original-Reparaturlacks

Zu 500 Gewichtsteilen des erfindungsgemäßen weißen Decklacks des Beispiels 1 wurden 35 Gewichtsteile eines handelsüblichen Hexamethylendiisocyanatoligomeren mit enger Molmassenverteilung (75-%ig in 2-Methoxypropylacetat-1) und 2,5 Gewichtsteile einer 1- %igen Lösungs von Dibutylzinndilaurat in 2-Methoxypropylacetat-1 hinzugegeben. Die resultierende Mischung wurde mit einem üblichen Laborrührer homogenisiert. Es resultierte ein weißer Original-Reparaturlack mit einem Gehalt an nichtflüchtigen Bestandteilen von 51 Gew.-% und einer Standzeit bzw. Verarbeitungszeit von bis zu vier Stunden.

### Beispiele 3 und 4

### Die Herstellung eines erfindungsgemäßen Unidecklacks und einer erfindungsgemäßen Original-Reparaturlackierung

Auf übliche Karosseriebleche, die mit einer 20µm dicken Elektrotauchlackierung, hergestellt aus einem handelsüblichen kationischen Elektrotauchlack, und einer 35µm dicken Füllerschicht, hergestellt aus einem handelsüblichen hellgrauen Wasserfüller, beschichtet waren, wurden der Unidecklack des Beispiels 1 (Beispiel 3) und der Original-Reparaturlack des Beispiels 2 (Beispiel 4) appliziert. Zu diesem Zweck wurden die Lacke mit deionisiertem Wasser auf eine Auslaufviskosität von 60" (DIN 20/4) eingestellt.

Für das Beispiel 3 wurde der Unidecklack des Beispiels 1 mit einer pneumatischen Hochleistungsspritzpistole so aufgetragen, daß nach dem Einbrennen eine Schichtdicke von 43µm resultierte. Nach der Applikation wurde die Unidecklackschicht während 10 Minuten bei Raumtemperatur abgelüftet, 10 Minuten bei 80°C vorgetrocknet und dann in einem Umluftofen während 20 Minuten bei 140°C (Objekttemperatur) eingebrannt. Die anwendungstechnischen Eigenschaften der resultierenden erfindungsgemäßen Unidecklackierung finden sich in der Tabelle.

Für das Beispiel 4 wurde der Original-Reparaturlack des Beispiels 2 in gleicher Weise auf die Unidecklackierung des Beispiels 3 appliziert, so daß nach der Aushärtung eine Schichtdicke von 41 µm resultierte. Nach ihrer Applikation wurde die Reparaturlackschicht während 10 Minuten bei Raumtemperatur abgelüftet und anschließend während 30 Minuten bei 100°C in einem Umluftofen getrocknet. Die anwendungstechnischen Eigenschaften der resultierenden erfindungsgemäßen Reparaturlackierung finden sich ebenfalls in der Tabelle.

**Tabelle 1:**

| **Anwendungstechnische Eigenschaften der Unidecklackierung (Beispiel 3) und der Reparaturlackierung (Beispiel 4)** | | |
|---|---|---|
| **Eigenschaften** | **Beispiel 3** | **Beispiel 4** |
| Glanz nach Gardner bei 20° (%) | 84 | 86 |
| | | |
| Haftung nach der Gitterschnittprüfung nach DIN ISO 2409: 1994-10 | GTO | GTO |
| | | |
| Härte nach der Pendeldämpfungs-Prüfung nach König (s) | 154 | 140 |
| | | |
| Lösemittelbeständigkeit im Acetontest (Doppelhübe) | >200 | >200 |
| | | |
| Steinschlagbeständigkeit nach VDA 2x500g, 2 bar (Kennwert) | 2 | 2 |
| | | |
| Erichsentiefung (DIN EN ISO 1520:1995-04) | 6,6 | 6,0 |

Die Werte der Tabelle untermauern die Vorteilhaftigkeit der erfindungsgemäßen Unidecklacke und Original-Reparaturlacke. Hinzu kommt noch, daß bei der Herstellung der erfindungsgemäßen Unidecklackierungen weitaus weniger flüchtige organische Bestandteile, insbesondere organische Lösemittel, freigesetzt wurden, als bei der Herstellung einer üblichen und bekannten Zweischichtlackierung, bei der ein lösemittelhaltiger Zweikomponenten-Klarlack verwendet wurde. Dabei erwies sich die erfindungsgemäße Unidecklackierung bei der Lackierung von Nutzfahrzeugen in ihren optischen und sonstigen Eigenschaften den üblichen und bekannten Zweischichtlackierung als ebenbürtig, wenn nicht gar als überlegen.

## Patentansprüche

1. Wäßriger Beschichtungsstoff, enthaltend
A) mindestens einen wasserlöslichen oder -dispergierbaren Polyester,
B) mindestens ein wasserlösliches oder -dispergierbares Polyurethanacrylat,
C) mindestens ein Aminoplastharz, das als solches oder in der Gegenwart der Bestandteile (A) und (B) wasserlöslich oder -dispergierbar ist und
D) mindestens ein farb- und/oder effektgebendes Pigment und/oder einen Füllstoff sowie gegebenenfalls
E) mindestens ein Polyisocyanat,
**dadurch gekennzeichnet, daß** der Polyester (A) herstellbar ist aus
a1) einem Gemisch, enthaltend
a11) 40 bis 80 Mol-% mindestens einer aliphatischen oder cycloaliphatischen Polycarbonsäure oder mindestens eines veresterungsfähigen Derivats einer aliphatischen oder cycloaliphatischen Polycarbonsäure oder eines Gemisches mindestens zweier dieser Ausgangsprodukte,
a12) 20 bis 60 Mol-% mindestens einer aromatischen Polycarbonsäure, mindestens eines veresterungsfähigen Derivats einer aromatischen Polycarbonsäure oder eines Gemisches mindestens zweier dieser Ausgangsprodukte;
und
a2) mindestens 60 Mol-% mindestens eines aliphatischen oder cycloaliphatischen Polyols, das im Molekül mindestens ein Strukturelement -C(R¹R²)-CH₂OH, worin die Reste R¹ und R² für aliphatische, cycloaliphatische oder aromatische Kohlenwasserstoffereste mit 1 bis 20 Kohlenstoffatomen oder für Methylolgruppen stehen, enthält, oder eines Gemisches mindestens zweier dieser Ausgangsprodukte.

2. Verfahren zur Herstellung eines wäßrigen Beschichtungsstoffs durch Vermischen mindestens der folgenden Bestandteile in einem wäßrigem Medium:
A) mindestens ein wasserlöslicher oder -dispergierbarer Polyester,
B) mindestens ein wasserlösliches oder -dispergierbares Polyurethanacrylat,
C) mindestens ein Aminoplastharz, das als solches oder in der Gegenwart der Bestandteile (A) und (B) wasserlöslich oder -dispergierbar ist, und
D) mindestens ein farb- und/oder effektgebendes Pigment und/oder ein Füllstoff;
**dadurch gekennzeichnet, daß** der Polyester (A) herstellbar ist aus
a1) einem Gemisch, enthaltend
a11) 40 bis 80 Mol-% mindestens einer aliphatischen oder cycloaliphatischen Polycarbonsäure oder mindestens eines veresterungsfähigen Derivats einer aliphatischen oder cycloaliphatischen Polycarbonsäure oder eines Gemisches mindestens zweier dieser Ausgangsprodukte,
a12) 20 bis 60 Mol-% mindestens einer aromatischen Polycarbonsäure, mindestens eines veresterungsfähigen Derivats einer aromatischen Polycarbonsäure oder eines Gemisches mindestens zweier dieser Ausgangsprodukte;
und
a2) mindestens 60 Mol-% mindestens eines aliphatischen oder cycloaliphatischen Polyols, das im Molekül mindestens ein Strukturelement -C(R¹R²)-CH₂OH, worin die Reste R¹ und R² für aliphatische, cycloaliphatische oder aromatische Kohlenwasserstoffereste mit 1 bis 20 Kohlenstoffatomen oder für Methylolgruppen stehen, enthält, oder eines Gemisches mindestens zweier dieser Ausgangsprodukte.

3. Verfahren zur Herstellung eines wäßrigen Beschichtungsstoffs durch
I) Vermischen mindestens der folgenden Bestandteile in einem wäßrigem Medium:
A) mindestens ein wasserlöslicher oder -dispergierbarer Polyester,
B) mindestens ein wasserlösliches oder -dispergierbares Polyurethanacrylat,
C) mindestens ein Aminoplastharz, das als solches oder in der Gegenwart der Bestandteile (A) und (B) wasserlöslich oder - dispergierbar ist, und
D) mindestens ein farb- und/oder effektgebendes Pigment und/oder ein Füllstoff;
wodurch die Komponente (I) resultiert;
II) Vermischen der Komponente (I) mit mindestens einem Polyisocyanat (E),
**dadurch gekennzeichnet, daß** der Polyester (A) herstellbar ist aus
a1) einem Gemisch, enthaltend
a11) 40 bis 80 Mol-% mindestens einer aliphatischen oder cycloaliphatischen Polycarbonsäure oder mindestens eines veresterungsfähigen Derivats einer aliphatischen oder cycloaliphatischen Polycarbonsäure oder eines Gemisches mindestens zweier dieser Ausgangsprodukte,
a12) 20 bis 60 Mol-% mindestens einer aromatischen Polycarbonsäure, mindestens eines veresterungsfähigen Derivats eine aromatischen Polycarbonsäure oder eines Gemisches mindestens zweier dieser Ausgangsprodukte;
und
a2) mindestens 60 Mol-% mindestens eines aliphatischen oder cycloaliphatischen Polyols, das im Molekül mindestens ein Strukturelement -C(R¹R²)-CH₂OH, worin die Reste R¹ und R² für aliphatische, cycloaliphatische oder aromatische Kohlenwasserstoffereste mit 1 bis 20 Kohlenstoffatomen oder für Methylolgruppen stehen, enthält, oder eines Gemisches mindestens zweier dieser Ausgangsprodukte.

4. Der Beschichtungsstoff nach Anspruch 1, das Verfahren nach Anspruch 2 und das Verfahren nach Anspruch 3, **dadurch gekennzeichnet, daß** die Ausgangsprodukte a1) und a2) in einem molaren Verhältnis von a1) : a2) = 1,1 - 2 : 1, vorzugsweise 1,2 - 1,7 : 1 und insbesondere 1,25 - 1,6 : 1 miteinander umgesetzt werden.

5. Der Beschichtungsstoff nach Anspruch 1 oder 4, das Verfahren nach Anspruch 2 oder 4 und das Verfahren nach Anspruch 3 oder 4, **dadurch gekennzeichnet, daß** der Verzweigungsgrad des Polyesters (A) bei 1,0 bis 2,0, vorzugsweise 1,2 bis 1,9 und insbesondere 1,4 bis 1,8 mol/kg liegt.

6. Der Beschichtungsstoff nach einem der Ansprüche 1, 4 oder 5, das Verfahren nach einem der Ansprüche 2, 4 oder 5 und das Verfahren nach einem der Ansprüche 3 bis 5, **dadurch gekennzeichnet, daß** der Polyester (A) ein zahlenmittleres Molekulargewicht von 650 bis 2.500, vorzugsweise 800 bis 2.250 und insbesondere 1.000 bis 2.000 Dalton, eine Säurezahl von 25 bis 55, vorzugsweise 27 bis 50 und insbesondere 27 bis 40 mg KOH/g und/oder eine Hydroxylzahl von 80 bis 180, vorzugsweise 100 bis 170 und insbesondere 120 bis 160 mg KOH/g aufweist.

7. Der Beschichtungsstoff nach einem der Ansprüche 1 oder 4 bis 6, das Verfahren nach einem der Ansprüche 2 oder 4 bis 6 und das Verfahren nach einem der Ansprüche 3 bis 6, **dadurch gekennzeichnet, daß** die Bestandteile (A), (B), (C) und (D) in Mengen von
A) 2 bis 90, vorzugsweise 3 bis 80 und insbesondere 5 bis 70 Gew.-%,
B) 1 bis 80, vorzugsweise 3 bis 70 und insbesondere 4 bis 60 Gew.-%,
C) 1 bis 80, vorzugsweise 2 bis 70 und insbesondere 3 bis 60 Gew.-% und
D) 1 bis 95, vorzugsweise 2 bis 90 und insbesondere 3 bis 85 Gew.-%,
angewandt werden, wobei die Gew.-% jeweils auf den Gesamtfeststoffgehalt des Beschichtungsstoffs bezogen sind und sich die Mengen der Bestandteile (A), (B), (C) und (D) stets zu 100 Gew.-% addieren.

8. Der Beschichtungsstoff nach einem der Ansprüche 1 oder 4 bis 7 und das Verfahren nach einem der Ansprüche 3 bis 7, **dadurch gekennzeichnet, daß** der Bestandteil (E) in einer Menge von 0,5 bis 50, vorzugsweise 1 bis 40 und insbesondere 2 bis 30 Gew.-%, jeweils bezogen auf den Gesamtfeststoffgehalt des Beschichtungsstoffs, angewandt wird.

9. Der wäßrige Beschichtungsstoff nach einem der Ansprüche 1 oder 4 bis 8, das Verfahren nach einem der Ansprüche 2 oder 4 bis 7 und das Verfahren nach einem der Ansprüche 3 bis 8, **dadurch gekennzeichnet, daß** die Bestandteile (A), (B) und (C) in einem Mengenverhältnis von (A) : (B) : (C) = 25 - 70 : 10 - 40 : 10 - 40, vorzugsweise 30 - 50 : 20 - 37 : 20 - 37 und insbesondere 35 - 45 : 25 - 35 : 25 - 35 angewandt werden.

10. Der wäßrige Beschichtungsstoff nach einem der Ansprüche 1 oder 4 bis 9, das Verfahren nach einem der Ansprüche 2, 4 bis 7 oder 9 und das Verfahren nach einem der Ansprüche 3 bis 9, **dadurch gekennzeichnet, daß** das Polyurethanacrylat (B) erhältlich ist, indem man in einer wäßrigen Dispersion in der Gegenwart
B1) mindestens eines dispergierten Polyurethanharzes, das erhältlich ist aus
b1 ) mindestens einem Polyisocyanat gegebenenfalls zusammen mit mindestens einem Monoisocyanat;
b2) mindestens einem Polyester- und/oder Polyetherpolyol mit einem zahlenmittleren Molekulargewicht von 400 bis 5.000;
b3) mindestens einer Verbindung, die
b31) mindestens eine gegenüber lsocyanatgruppen reaktive Gruppe sowie
b32) mindestens eine anionische und/oder durch Neutralisationsmittel in Anionen überführbare Gruppe, und/oder
b33) mindestens eine nichtionische hydrophile Gruppen enthält;
sowie
b4) mindestens einer Verbindung, die
b41) mindestens eine gegenüber Isocyanatgruppen reaktive Gruppe und
b42) mindestens eine olefinisch ungesättigte Gruppe enthält;
und
B2) mindestens eines Gemisches der Monomeren (B21), (B22) und (B23) folgender Zusammensetzung:
50 bis 95 Gew.-% (B21): säuregruppenfreie (Meth)acrylsäureester,
2 bis 30 Gew.-%, B (22): Monomere, welche mindestens eine Hydroxylgruppe, Aminogruppe, Alkoxymethylaminogruppe oder Iminogruppe pro Molekül tragen und säuregruppenfrei sind,
2 bis 25 Gew.-% (B23): Monomere, welche mindestens eine Säuregruppe, die in die entsprechende Säureaniongruppe überführbar ist, pro Molekül tragen,
radikalisch polymerisiert.

11. Der Beschichtungsstoff nach einem der Ansprüche 1 oder 4 bis 10, das Verfahren nach einem der Ansprüche 2, 4 bis 7, 9 oder 10 und das Verfahren nach einem der Ansprüche 3 bis 10, **dadurch gekennzeichnet, daß** man als Aminoplastharz (C) ein Melaminformaldehydharz eines niedrigen Kondensationsgrads mit C₁- bis C₄-Alkylethergruppen und mit 0,1 bis 1,5 freien Iminogruppen pro Melaminkern verwendet.

12. Der Beschichtungsstoff nach einem der Ansprüche 1 oder 4 bis 11, das Verfahren nach einem der Ansprüche 2, 4 bis 7 oder 8 bis 11 und das Verfahren nach einem der Ansprüche 3 bis 11 **dadurch gekennzeichnet, daß** mindestens ein mit aktinischer Strahlung härtbarer Bestandteil (G) angewandt wird (Dual Cure).

13. Die Verwendung des Beschichtungsstoffs gemäß einem der Ansprüche 1 oder 4 bis 12, des nach dem Verfahren gemäß einem der Ansprüche 2, 4 bis 7 oder 8 bis 12 hergestellten Beschichtungsstoffs und/oder des nach dem Verfahren gemäß einem der Ansprüche 3 bis 12 hergestellten Beschichtungsstoffs als Unidecklack oder Wasserbasislack, insbesondere als Unidecklack in der Nutzfahrzeugserien- und -reparaturlackierung.

14. Verfahren zur Herstellung ein- oder mehrschichtiger farb- und/oder effektgebender Lackierungen durch Applikation mindestens eines Beschichtungsstoffs auf grundierte oder ungrundierte Substrate, **dadurch gekennzeichnet, daß** man hierbei mindestens einen Beschichtungsstoff gemäß einem der Ansprüche 1 oder 4 bis 12, mindestens einen nach dem Verfahren gemäß einem der Ansprüche 2, 4 bis 7 oder 8 bis 12 hergestellten Beschichtungsstoff und/oder mindestens einen nach dem Verfahren gemäß einem der Ansprüche 3 bis 12 hergestellten Beschichtungsstoff verwendet.

15. Ein- und mehrschichtige farb- und/oder effektgebende Lackierungen, herstellbar aus mindestens einem Beschichtungsstoff gemäß einem der Ansprüche 1 oder 4 bis 12, mindestens einem nach dem Verfahren gemäß einem der Ansprüche 2, 4 bis 7 oder 8 bis 12 hergestellten Beschichtungsstoff und/oder mindestens einem nach dem Verfahren gemäß einem der Ansprüche 3 bis 12 hergestellten Beschichtungsstoff.

16. Grundierte und ungrundierte Substrate, enthaltend mindestens eine einschichtige und/oder mindestens eine mehrschichtige farb- und/oder effektgebende Lackierung gemäß Anspruch 15.

## Claims

1. An aqueous coating material comprising
A) at least one water-soluble or -dispersible polyester,
B) at least one water-soluble or -dispersible polyurethane acrylate,
C) at least one amino resin which per se or in the presence of ingredients (A) and (B) is water-soluble or -dispersible, and
D) at least one color and/or effect pigment and/or one filler, and also, if desired,
E) at least one polyisocyanate,
**characterized in that** the polyester (A) is preparable from
a1) a mixture comprising
a11) from 40 to 80 mol% of at least one aliphatic or cycloaliphatic polycarboxylic acid or at least one esterifiable derivative of an aliphatic or cycloaliphatic polycarboxylic acid or a mixture of at least two of these starting products,
a12) from 20 to 60 mol% of at least one aromatic polycarboxylic acid, at least one esterifiable derivative of an aromatic polycarboxylic acid. or a mixture of at least two of these starting products;
and
a2) at least 60 mol% of at least one aliphatic or cycloaliphatic polyol whose molecule includes at least one structural element -C(R¹R²)-CH₂OH in which the radicals R¹ and R² stand for aliphatic, cycloaliphatic or aromatic hydrocarbon radicals having from 1 to 20 carbon atoms or for methylol groups, or a mixture of at least two of these starting products.

2. A process for preparing an aqueous coating material by mixing at least the following ingredients in an aqueous medium:
A) at least one water-soluble or -dispersible polyester,
B) at least one water-soluble or -dispersible polyurethane acrylate,
C) at least one amino resin which per se or in the presence of ingredients (A) and (B) is water-soluble or -dispersible, and
D) at least one color and/or effect pigment and/or one filler;
**characterized in that** the polyester (A) is preparable from
a1) a mixture comprising
a11) from 40 to 80 mol% of at least one aliphatic or cycloaliphatic polycarboxylic acid or at least one esterifiable derivative of an aliphatic or cycloaliphatic polycarboxylic acid or a mixture of at least two of these starting products,
a12) from 20 to 60 mol% of at least one aromatic polycarboxylic acid, at least one esterifiable derivative of an aromatic polycarboxylic acid or a mixture of at least two of these starting products;
and
a2) at least 60 mol% of at least one aliphatic or cycloaliphatic polyol whose molecule includes at least one structural element -C(R¹R²)-CH₂OH in which the radicals R¹ and R² stand for aliphatic, cycloaliphatic or aromatic hydrocarbon radicals having from 1 to 20 carbon atoms or for methylol groups, or a mixture of at least two of these starting products.

3. A process for preparing an aqueous coating material by
I) mixing at least one of the following ingredients in an aqueous medium:
A) at least one water-soluble or -dispersible polyester,
B) at least one water-soluble or -dispersible polyurethane acrylate,
C) at least one amino resin which per se or in the presence of ingredients (A) and (B) is water-soluble or -dispersible, and
D) at least one color and/or effect pigment and/or one filler;
to give component (I);
and
II) mixing component (I) with at least one polyisocyanate (E),
**characterized in that** the polyester (A) is preparable from
a1) a mixture comprising
a11) from 40 to 80 mol% of at least one aliphatic or cycloaliphatic polycarboxylic acid or at least one esterifiable derivative of an aliphatic or cycloaliphatic polycarboxylic acid or a mixture of at least two of these starting products,
a12) from 20 to 60 mol% of at least one aromatic polycarboxylic acid, at least one esterifiable derivative of an aromatic polycarboxylic acid or a mixture of at least two of these starting products;
and
a2) at least 60 mol% of at least one aliphatic or cycloaliphatic polyol whose molecule includes at least one structural element -C(R¹R²)-CH₂OH in which the radicals R¹ and R² stand for aliphatic, cycloaliphatic or aromatic hydrocarbon radicals having from 1 to 20 carbon atoms or for methylol groups, or a mixture of at least two of these starting products.

4. The coating material of claim 1, the process of claim 2 and the process of claim 3, **characterized in that** the starting products a1) and a2) are reacted with one another in a molar ratio a1) :a2) = 1.1-2:1, preferably 1.2-1.7:1, and in particular 1.25-1.6:1.

5. The coating material of claim 1 or 4, the process of claim 2 or 4 and the process of claim 3 or 4, **characterized in that** the degree of branching of the polyester (A) is from 1.0 to 2.0, preferably from 1.2 to 1.9, and in particular from 1.4 to 1.8, mol/kg.

6. The coating material of one of claims 1, 4 or 5, the process of one of claims 2, 4 or 5 and the process of one of claims 3 to 5, **characterized in that** the polyester (A) has a number-average molecular weight of from 650 to 2 500, preferably from 800 to 2 250, and in particular from 1 000 to 2 000, daltons, an acid number of from 25 to 55, preferably from 27 to 50, and in particular from 27 to 40, mg KOH/g and/or a hydroxyl number of from 80 to 180, preferably from 100 to 170, and in particular from 120 to 160, mg KOH/g.

7. The coating material of one of claims 1 or 4 to 6, the process of one of claims 2 or 4 to 6 and the process of one of claims 3 to 6, **characterized in that** the ingredients (A), (B), (C), and (D) are employed in amounts of
A) from 2 to 90%, preferably from 3 to 80%, and in particular from 5 to 70%, by weight,
B) from 1 to 80%, preferably from 3 to 70%, and in particular from 4 to 60%, by weight,
C) from 1 to 80%, preferably from 2 to 70%, and in particular from 3 to 60%, by weight, and
D) from 1 to 95%, preferably from 2 to 90%, and in particular from 3 to 85%, by weight,
the percentages by weight being based in each case on the overall solids content of the coating material, and the amounts of ingredients (A), (B), (C), and (D) always adding up to 100% by weight.

8. The coating material of one of claims 1 or 4 to 7 and the process of one of claims 3 to 7, **characterized in that** the ingredient (E) is employed in an amount of from 0.5 to 50%, preferably from 1 to 40%, and in particular from 2 to 30%, by weight based in each case on the overall solids content of the coating material.

9. The aqueous coating material of one of claims 1 or 4 to 8, the process of one of claims 2 or 4 to 7 and the process of one of claims 3 to 8, **characterized in that** the ingredients (A), (B), and (C) are employed in a ratio (A) : (B) : (C) = 25-70:10-40:10-40, preferably 30-50:20-37:20-37, and in particular 35-45:25-35:25-35.

10. The aqueous coating material of one of claims 1 or 4 to 9, the process of one of claims 2, 4 to 7 or 9 and the process of one of claims 3 to 9,
**characterized in that** the polyurethane acrylate (B) is obtainable by carrying out free-radical polymerization in an aqueous dispersion in the presence
B1) of at least one dispersed polyurethane resin obtainable from
b1) at least one polyisocyanate alone or together with at least one monoisocyanate;
b2) at least one polyester polyol and/or polyether polyol having a number-average molecular weight of from 400 to 5 000;
b3) at least one compound containing
b31) at least one isocyanate-reactive group and also
b32) at least one group which is anionic and/or is convertible into anions by neutralizing agents,
and/or
b33) at least one nonionic hydrophilic groups;
and also
b4) at least one compound containing
b41) at least one isocyanate-reactive group and
b42) at least one olefinically unsaturated group; and
B2) at least one mixture of the monomers (B21), B2) (B22) and (B23) of the following composition:
from 50 to 95% by weight of (B21): acid group-free methacrylic esters,
from 2 to 30% by weight of (B22): monomers which carry per molecule at least one hydroxyl group, amino group, alkoxymethylamino group or imino group and are acid group free,
from 2 to 25% by weight of (B23): monomers which carry per molecule at least one acid group which can be converted into the corresponding acid anion group.

11. The coating material of one of claims 1 or 4 to 10, the process of one of claims 2, 4 to 7, 9 or 10 and the process of one of claims 3 to 10, **characterized in that** as amino resin (C) a melamine-formaldehyde resin with a low degree of condensation containing C₁ to C₄ alkyl ether groups and containing from 0.1 to 1.5 free imino groups per melamine nucleus is used.

12. The coating material of one of claims 1 or 4 to 11, the process of one of claims 2, 4 to 7 or 8 to 11 and the process of one of claims 3 to 11, **characterized in that** at least one ingredient (G) curable with actinic radiation is employed (dual cure).

13. The use of the coating material of one of claims 1 or 4 to 12, of the coating material prepared by the process of one of claims 2, 4 to 7 or 8 to 12 and/or of the coating material prepared by the process of one of claims 3 to 12 as a solid-color topcoat material or aqueous basecoat material, especially as a solid-color topcoat material in the OEM finishing and refinish of commercial vehicles.

14. A process for producing single-coat or multicoat color and/or effect paint systems by applying at least one coating material to primed or unprimed substrates, **characterized in that** said process uses at least one coating material of one of claims 1 or 4 to 12, at least one coating material prepared by the process of one of claims 2, 4 to 7 or 8 to 12 and/or at least one coating material prepared by the process of one of claims 3 to 12.

15. Single-coat and multicoat color and/or effect paint systems producible from at least one coating material of one of claims 1 or 4 to 12, at least one coating material prepared by the process of one of claims 2, 4 to 7 or 8 to 12 and/or at least one coating material prepared by the process of one of claims 3 to 12.

16. Primed and unprimed substrates comprising at least one single-coat and/or at least one multicoat color and/or effect paint system of claim 15.

## Revendications

1. Matière aqueuse de revêtement, contenant
A) au moins un polyester soluble ou dispersable dans l'eau,
B) au moins un polyuréthanne-acrylate soluble ou dispersable dans l'eau,
C) au moins un aminoplaste qui, tel quel ou en présence des composants (A) et (B), est soluble ou dispersable dans l'eau, et
D) au moins un pigment colorant et/ou à effet et/ou une charge, ainsi qu'éventuellement
E) au moins un polyisocyanate,
**caractérisée en ce que** le polyester (A) peut être préparé à partir de
a1) un mélange contenant
a11) 40 à 80 % en moles d'au moins un poly(acide carboxylique) aliphatique ou cycloaliphatique ou d'au moins un dérivé estérifiable d'un poly(acide carboxylique) aliphatique ou cycloaliphatique, ou d'un mélange d'au moins deux de ces produits de départ,
a12) 20 à 60 % en moles d'au moins un poly(acide carboxylique) aromatique, d'au moins un dérivé estérifiable d'un poly(acide carboxylique) aromatique, ou d'un mélange d'au moins deux de ces produits de départ,
et
a2) au moins 60 % en moles d'au moins un polyol aliphatique ou cycloaliphatique, qui contient dans la molécule au moins un élément structural -C(R¹R²)-CH₂OH, dans lequel les radicaux R¹ et R² représentent des radicaux hydrocarbonés aliphatiques, cycloaliphatiques ou aromatiques ayant de 1 à 20 atomes de carbone ou des groupes méthylol, ou d'un mélange d'au moins deux de ces produits de départ.

2. Procédé pour la préparation d'une matière aqueuse de revêtement par mélange d'au moins les composants suivants dans un milieu aqueux :
A) au moins un polyester soluble ou dispersable dans l'eau,
B) au moins un polyuréthanne-acrylate soluble ou dispersable dans l'eau,
C) au moins un aminoplaste qui, tel quel ou en présence des composants (A) et (B) est soluble ou dispersable dans l'eau, et
D) au moins un pigment colorant et/ou à effet et/ou une charge ;
**caractérisé en ce que** le polyester (A) peut être préparé à partir de
a1) un mélange contenant
a11) 40 à 80 % en moles d'au moins un poly(acide carboxylique) aliphatique ou cycloaliphatique ou d'au moins un dérivé estérifiable d'un poly(acide carboxylique) aliphatique ou cycloaliphatique, ou d'un mélange d'au moins deux de ces produits de départ,
a12) 20 à 60 % en moles d'au moins un poly(acide carboxylique) aromatique, d'au moins un dérivé estérifiable d'un poly(acide carboxylique) aromatique, ou d'un mélange d'au moins deux de ces produits de départ,
et
a2) au moins 60 % en moles d'au moins un polyol aliphatique ou cycloaliphatique, qui contient dans la molécule au moins un élément structural -C(R¹R²)-CH₂OH, dans lequel les radicaux R¹ et R² représentent des radicaux hydrocarbonés aliphatiques, cycloaliphatiques ou aromatiques ayant de 1 à 20 atomes de carbone ou des groupes méthylol, ou d'un mélange d'au moins deux de ces produits de départ.

3. Procédé pour la préparation d'une matière aqueuse de revêtement par
I) un mélange d'au moins les composants suivants, dans un milieu aqueux :
A) au moins un polyester soluble ou dispersable dans l'eau,
B) au moins un polyuréthanne-acrylate soluble ou dispersable dans l'eau,
C) au moins un aminoplaste qui, tel quel ou en présence des composants (A) et (B) est soluble ou dispersable dans l'eau, et
D) au moins un pigment colorant et/ou à effet et/ou une charge ;
d'où il résulte le composant (I) ;
II) mélange du composant (I) avec au moins un polyisocyanate (E),
**caractérisé en ce que** le polyester (A) peut être préparé à partir de
a1) un mélange contenant
a11) 40 à 80 % en moles d'au moins un poly(acide carboxylique) aliphatique ou cycloaliphatique ou d'au moins un dérivé estérifiable d'un poly(acide carboxylique) aliphatique ou cycloaliphatique, ou d'un mélange d'au moins deux de ces produits de départ,
a12) 20 à 60 % en moles d'au moins un poly(acide carboxylique) aromatique, d'au moins un dérivé estérifiable d'un poly(acide carboxylique) aromatique, ou d'un mélange d'au moins deux de ces produits de départ,
et
a2) au moins 60 % en moles d'au moins un polyol aliphatique. ou cycloaliphatique, qui contient dans la molécule au moins un élément structural -C(R¹R²)-CH₂OH, dans lequel les radicaux R¹ et R² représentent des radicaux hydrocarbonés aliphatiques, cycloaliphatiques ou aromatiques ayant de 1 à 20 atomes de carbone ou des groupes méthylol, ou d'un mélange d'au moins deux de ces produits de départ.

4. Matière de revêtement selon la revendication 1, procédé selon la revendication 2 et procédé selon la revendication 3, **caractérisés en ce que** les produits de départ a1) et a2) sont mis en réaction l'un avec l'autre en un rapport molaire a1):a2) de 1,1-2:1, de préférence de 1,2-1,7:1 et en particulier de 1,25-1,6:1.

5. Matière de revêtement selon la revendication 1 ou 4, procédé selon la revendication 2 ou 4 et procédé selon la revendication 3 ou 4, **caractérisés en ce que** le degré de ramification du polyester (A) va de 1,0 à 2,0, de préférence de 1,2 à 1,9 et en particulier de 1,4 à 1,8 mole/kg.

6. Matière de, revêtement selon l'une quelconque des revendications 1, 4 et 5, procédé selon l'une quelconque des revendications 2, 4 et 5 et procédé selon l'une quelconque des revendications 3 à 5, **caractérisés en ce que** le polyester (A) présente une masse moléculaire moyenne en nombre de 650 à 2 500, de préférence de 800 à 2 250 et en particulier de 1 000 à 2 000 daltons, un indice d'acide de 25 à 55, de préférence de 27 à 50 et en particulier de 27 à 40 mg de KOH/g et/ou un indice de groupes hydroxy de 80 à 180, de préférence de 100 à 170 et en particulier de 120 à 160 mg de KOH/g.

7. Matière de revêtement selon l'une quelconque des revendications 1 et 4 à 6, procédé selon l'une quelconque des revendications 2 et 4 à 6 et procédé selon l'une quelconque des revendications 3 à 6, **caractérisés en ce que** les composants (A), (B), (C) et (D) sont utilisés en quantités de
A) 2 à 90, de préférence 3 à 80 et en particulier 5 à 70 % en poids,
B) 1 à 80, de préférence 3 à 70 et en particulier 4 à 60 % en poids,
C) 1 à 80, de préférence 2 à 70 et en particulier 3 à 60 % en poids
et
D) 1 à 95, de préférence 2 à 90 et en particulier 3 à 85 % en poids,
les pourcentages en poids étant chacun par rapport à la teneur totale en matière solide de la matière de revêtement et les quantités des composants (A), (B), (C) et (D) se complétant toujours à 100 % en poids.

8. Matière de revêtement selon l'une quelconque des revendications 1 et 4 à 7 et procédé selon l'une quelconque des revendications 3 à 7, **caractérisés en ce que** le composant (E) est utilisé en une quantité de 0,5 à 50, de préférence de 1 à 40 et en particulier de 2 à 30 % en poids, dans chaque cas par rapport à la teneur totale en matière solide de la matière de revêtement.

9. Matière aqueuse de revêtement selon l'une quelconque des revendications 1 et 4 à 8, procédé selon l'une quelconque des revendications 2 et 4 à 7 et procédé selon l'une quelconque des revendications 3 à 8, **caractérisés en ce que** les composants (A), (B) et (C) sont utilisés en un rapport de quantité (A) : (B) : (C) = 25-70:10-40:10-40, de préférence 30-50:20-37:20-37 et en particulier 35-45:25-35:25-35.

10. Matière aqueuse de revêtement selon l'une quelconque des revendications 1 et 4 à 9, procédé selon l'une quelconque des revendications 2, 4 à 7 et 9 et procédé selon l'une quelconque des revendications 3 à 9, **caractérisés en ce que** le polyuréthanne-acrylate (B) peut être obtenu par polymérisation radicalaire, dans une dispersion aqueuse, en présence
B1) d'au moins une résine polyuréthanne dispersée qui peut être obtenue à partir de
b1) au moins un polyisocyanate éventuellement conjointement avec au moins un monoisocyanate ;
b2) au moins un polyester- et/ou polyétherpolyol ayant une masse moléculaire moyenne en nombre de 400 à 5 000 ;
b3) au moins un composé qui contient
b31) au moins un groupe réactif vis-à-vis de groupes isocyanate, ainsi que
b32) au moins un groupe anionique et/ou pouvant être converti en anions par des agents de neutralisation et/ou
b33) au moins un groupe hydrophile non ionique ;
ainsi que
b4) au moins un composé qui contient
b41) au moins un groupe réactif vis-à-vis de groupes isocyanate et
b42) au moins un groupe à insaturation oléfinique ;
et
B2) au moins un mélange des monomères (B21), (B22) et (B23) de composition suivante :
50 à 95 % en poids de (B21) : esters d'acide (méth)acrylique exempts de groupes acides,
2 à 30 % en poids de (B22) : monomères qui portent au moins un groupe hydroxy, amino, alcoxyméthylamino ou imino par molécule et sont exempts de groupes acides,
2 à 25 % en poids de (B23) : monomères qui portent par molécule au moins un groupe acide qui peut être converti en le groupe anion d'acide correspondant.

11. Matière de revêtement selon l'une quelconque des revendications 1 et 4 à 10, procédé selon l'une quelconque des revendications 2, 4 à 7, 9 et 10 et procédé selon l'une quelconque des revendications 3 à 10, **caractérisés en ce qu'**on utilise en tant qu'aminoplaste (C) une résine mélamine-formaldéhyde ayant un faible degré de condensation et comportant des groupes alkyléther en C₁-C₄ et de 0,1 à 1,5 groupe imino libre par noyau de mélamine.

12. Matière de revêtement selon l'une quelconque des revendications 1 et 4 à 11, procédé selon l'une quelconque des revendications 2, 4 à 7 et 8 à 11 et procédé selon l'une quelconque des revendications 3 à 11, **caractérisés en ce qu'**on utilise au moins un composant (G) durcissable par un rayonnement actinique (Dual-Cure).

13. Utilisation de la matière de revêtement selon l'une quelconque des revendications 1 et 4 à 12, de la matière de revêtement préparée conformément au procédé selon l'une quelconque des revendications 2, 4 à 7 et 8 à 12 et/ou de la matière de revêtement préparée conformément au procédé selon l'une quelconque des revendications 3 à 12, en tant que peinture de finition universelle ou peinture de base à l'eau, en particulier en tant que peinture de finition universelle dans le peinturage en série et de réparation de véhicules utilitaires.

14. Procédé pour la production de revêtements de peinture mono- ou multicouches, colorés et/ou à effet, par application d'au moins une matière de revêtement sur des subjectiles revêtus ou non d'un primaire, **caractérisé en ce qu'**on utilise à cet effet au moins une matière de revêtement selon l'une quelconque des revendications 1 et 4 à 12, au moins une matière de revêtement préparée conformément au procédé selon l'une quelconque des revendications 2, 4 à 7 et 8 à 12 et/ou au moins une matière de revêtement préparée conformément au procédé selon l'une quelconque des revendications 3 à 12.

15. Revêtements de peinture mono- ou multicouches, colorés et/ou à effet, pouvant être préparés à partir d'au moins une matière de revêtement selon l'une quelconque des revendications 1 et 4 à 12, d'au moins une matière de revêtement préparée conformément au procédé selon l'une quelconque des revendications 2, 4 à 7 et 8 à 12 et/ou d'au moins une matière de revêtement préparée conformément au procédé selon l'une quelconque des revendications 3 à 12.

16. Subjectiles revêtus ou non d'un primaire, comportant au moins' un revêtement de peinture monocouché et/ou au moins un revêtement de peinture multicouche, coloré et/ou à effet, selon la revendication 15.
